# EUROPÄISCHE PATENTSCHRIFT

(11) **EP 2 129 605 B1**
(45) Veröffentlichungstag und Bekanntmachung des Hinweises auf die Patenterteilung: **12.09.2012**
(21) Anmeldenummer: 07856109.9
(22) Anmeldetag: 13.12.2007
(51) Int. Cl.: B65G 69/18

(54) **KUPPLUNGSVERSCHLUSS SOWIE ANDOCKEINRICHTUNG, ENTHALTEND ZWEI DIESER KUPPLUNGSVERSCHLÜSSE**
COUPLING CLOSURE, AND DOCKING DEVICE COMPRISING TWO OF SAID COUPLING CLOSURES
OBTURATEUR DE COUPLAGE ET MECANISME D'ACCROCHAGE CONTENANT DEUX DE CES OBTURATEURS DE COUPLAGE

(30) Priorität: 15.12.2006 EP 06026069; 19.01.2007 EP 07001108
(43) Veröffentlichungstag der Anmeldung: 09.12.2009
(73) Patentinhaber: GEA Pharma Systems AG, 4416 Bubendorf (CH)
(72) Erfinder: KOCH, Martin, 79395 Neuenburg-Grissheim (DE); LAIS, Peter, 79379 Müllheim (DE); PHILIPP, Gunter, 79585 Steinen (DE); STOYE, Joachim, 79395 Neuenburg-Grissheim (DE)
(74) Vertreter: Metten, Karl-Heinz
(86) Internationale Anmeldenummer: PCT/DE2007/002259
(87) Internationale Veröffentlichungsnummer: WO 2008/071181

(56) Entgegenhaltungen:
- CH-A5- 695 425
- DE-C1- 4 342 962
- US-A- 5 794 647

## Beschreibung

Die folgende Erfindung betrifft einen Kupplungsverschluß zum, insbesondere umweltisolierten, Umfüllen, Befüllen und/oder Entleeren von Behältnissen sowie eine Andockeinrichtung enthaltend zwei erfindungsgemäße miteinander gekuppelte bzw. kuppelbare Kupplungsverschlüsse. Ferner betrifft die Erfindung eine Arbeitsplattform zum Betätigen der erfindungsgemäßen Andockeinrichtung sowie ein Verfahren zum Umfällen, Befüllen und/oder Entleeren von Behältnissen unter Verwendung der erfindungsgemäßen Andockeinrichtung.

In vielen Bereichen insbesondere der weiterverarbeitenden Industrie werden häufig hohe Anforderungen an die Reinheit der eingesetzten Ausgangsprodukte gestellt, weshalb Kontaminationen durch Verunreinigungen an jeder Stelle des Verfahrensablaufes, und nicht nur bei der Herstellung und Isolierung der Ausgangsprodukte zu vermeiden sind. Häufig läßt sich jedoch beim Abfüllen der fertiggestellten Ausgangsprodukte in geeignete Gebinde sowie beim Umfüllen derselben zwecks Weiterverarbeitung zu Zwischen- oder Endprodukten ein Kontakt mit der Umgebung nicht vollständig vermeiden. Bereits hierdurch kann die Qualität der weiterverarbeiteten Produkte nachhaltig in Mitleidenschaft gezogen werden. Gegebenenfalls sind Produktchargen sogar komplett zu verwerfen. Andererseits ist insbesondere bei toxischen Verbindungen dafür Sorge zu tragen, daß Mensch und Umwelt mit diesen Substanzen nicht in Kontakt kommen, was ebenfalls ein sehr sorgfältiges umweltisoliertes Arbeiten erforderlich macht. Häufig genügt erst das Arbeiten unter Reinstraumbedingungen den Anforderungen, um toxische Substanzen in geeignete Verarbeitungsgebinde umfüllen zu können. Jedenfalls geht sowohl bei dem Bestreben, wertvolle Ausgangsprodukte nicht zu verunreinigen, als auch mit der Zielssetzung, die Umwelt nicht mit toxischen Verbindungen zu kontaminieren, ein hoher apparativer und sicherheitstechnischer Aufwand einher, der sich zwangsläufig auch bei den Herstellungskosten niederschlägt. Hohe Anforderungen an kontaminationsfreies Arbeiten werden z.B. regelmäßig von der lebensmittelverarbeitenden, der chemischen oder der pharmazeutischen Industrie gestellt, beispielsweise wenn Produkte in Form von Schüttgut oder Fluiden aus einem feststehenden ersten Behältnis in ein transportables zweites Behältnis zu überführen sind. Da manche Produkte schon in äußerst geringen Mengen sehr toxisch auf den menschlichen Organismus wirken und andere Produkte sehr empfindlich auf z.B. Lufteinwirkung reagieren, wurden seitens der Industrie effektive Kopplungselemente bzw. Andockeinrichtungen entwickelt, die ein Befüllen oder ein Entleeren eines Behältnisses in einem isolierten oder zumindest staubreinen Zustand ermöglichten sollen.

Für den kontaminationsfreien Transfer von Schüttgut haben sich Systeme, die sich der Halbklappentechnik bedienen, bewährt. Derartige Systeme werden zum Beispiel in der DE 695 04 581 T2 beschrieben. Auch aus der DE 43 42 962 C1 und DE 44 15 488 C2 sind Andocksysteme bekannt, bei denen Schließklappen in den Ein- und Ausgangsstutzen von zu kuppelnden Behältnissen flächig aneinander zur Anlage gebracht werden, um sodann aus einer Schließstellung in eine der den Durchgangskanal zumindest teilweise freigebenden Position um eine eigene Achse verschwenkt zu werden.

Um den apparativen Aufwand und die Kosten bei den ohnehin aufwendigeren Geräten, die sich zum Schüttguttransfer der Halbklappentechnik bedienen, im Rahmen zu halten, ist regelmäßig nur eine der Schließklappen dafür vorgesehen, über einen Antrieb oder manuell verschwenkt zu werden, auch Aktivklappe genannt. Die an der Aktivklappe anliegende Schließklappe, auch Passivklappe genannt, wird durch die Bewegung der Aktivklappe mitgenommen. Nachteilig bei solchen Systemen ist regelmäßig, daß nur eine zu der Aktivklappe korrespondierende Passivklappe ein funktionsfähiges Andocksystem zum kontaminationsfreien Transfer von Schüttgut liefert. Demgemäß ist dafür Sorge zu tragen, daß für jeden zu verwendenden Behälter stets die passende Klappenkonfiguration vorliegt. Ist beispielsweise entweder nur die Passivklappe oder die Aktivklappe defekt oder nicht auffindbar, kann das Andocksystem als ganzes nicht mehr eingesetzt werden. Ein weiterer Nachteil konventioneller Andockeinrichtungen auf der Basis der Halbklappentechnik besteht in der mangelnden Flexibilität und Anwendungsfreundlichkeit dieses Systems. Die konstruktiv aufwendigere und kostenintensivere Aktivklappe einer solchen Andockeinrichtung wird nahezu ausschließlich an einem feststehenden Container, den es zu Befüllen oder Entleeren gilt, angebracht, während die Passivklappe an einen mobilen Container oder ein mobiles Fördermittel, beispielsweise einen Schlauch oder ein Rohr, montiert vorliegt. Der direkte Schüttguttransfer von Container zu Container über den Einsatz von Passiv- und Aktivklappen ist mangels Praktikabilität selten anzutreffen.

Ein weiterer Nachteil bei Verwendung von Andockeinrichtungen, die aus einer Aktivklappe und einer Passivklappe gebildet werden, wird insbesondere bei Schließklappen mit großer Nennweite, beispielsweise im Bereich von 300 - 400 mm oder darüber, beobachtet. Bei der Drehung der Aktivklappe wird das Drehmoment auf die Passivklappe regelmäßig entfernt von der gemeinsamen Drehachse auf die Passivklappe übertragen. Hierbei kommt es häufig auf der gegenüberliegenden Seite im Bereich des umlaufenden Randes von Aktiv- und Passivklappe zu der Bildung eines Spaltes, in welchen Schüttgut eindringen kann. Bei der Entkopplung ist dann eine Kontamination der Umgebung mit Schüttgut nicht mehr zu verhindern, es sei denn, man greift auf aufwendige Absaug- und/oder Reinigungsvorrichtungen zurück, wie zum Beispiel in der DE 44 15 488 C2 oder der DE 214 871 U1 offenbart.

Aus der CH 695 425 A5 ist eine Vorrichtung zum Kuppeln von Behältnissen mit jeweils einer Öffnung und einem mit der Öffnung des einen Behältnisses dicht verbindbaren ersten Kupplungsstutzen und einem mit der Öffnung des anderen Behältnisses dicht verbindbaren zweiten Kupplungsstutzen bekannt. Dabei umfasst die Vorrichtung eine kippbar am ersten Kupplungsstutzen angeordnete erste Schließklappe, die in einer geschlossenen Kippstellung den ersten Kupplungsstutzen dicht abschließt, und eine kippbar am zweiten Kupplungsstutzen angeordnete zweite Schließklappe, die in einer geschlossenen Kippstellung den zweiten Kupplungsstutzen dicht abschließt. Dabei umfasst die Vorrichtung Mittel zum Verbinden der beiden Kupplungsstutzen mit aneinander anliegenden Schließklappen, sodass die beiden Schließklappen um eine gemeinsame Achse kippbar sind.

Aus der DE 4 342 962 C1 ist eine Vorrichtung zum Kuppeln von zwei, jeweils einen Anschluss-Rohrstutzen mit im wesentlichen kreisförmigem Querschnitt aufweisenden Behältnissen, wobei jeder der Rohrstutzen nahe seinem dem ihm tragenden Behältnis abgewandten Ende eine um einen Durchmesser des Rohrstutzens um im wesentlichen 90° schwenkbare Schließklappe umfasst.

Es wäre daher wünschenswert, auf Andockeinrichtungen sowie die diese Andockeinrichtungen bildenden Kupplungsverschlüsse zurückgreifen zu können, die nicht mehr mit den genannten Nachteilen de Stands der Technik behaftet sind. Der vorliegenden Erfindung lag daher die Aufgabe zugrunde, die sich auch im Dauergebrauch zuverlässig handhaben lassen, die einfach zu bedienen sind und denen in der Handhabungsbreite bzw. Flexibilität der Handhabung keine Beschränkungen auferlegt sind.

Demgemäß wurde ein Kupplungsverschluss für eine Andockeinrichtung zum, insbesondere umweltisolierten, Umfüllen, Befüllen und/oder Entleeren von Behältnissen mit einer Verschlußseite und einer Behälterseite gefunden, umfassend einen Rohrstutzen und eine darin verschwenkbar um eine Achse gelagerte Schließklappe, enthaltend eine der Verschlußseite in der Schließstellung zugewandte Außenseite, wobei die Schließklappe an mindestens einer Seite, insbesondere auf beiden Seiten, längs der Achse mit einer Partialwelle oder einem Partialwellenstummel in jeweils zur Verschlußseite hin offenem Lager gelagert ist, wobei die Partialwelle(n) oder -wellenstummel geeignet ist (sind), um bei Anlage mit komplementären Partialwellen bzw. wellenstummeln eines weiteren Kupplungsverschlusses eine Welle oder einen Wellenstummel auszubilden, wobei die Partialwelle oder der -wellenstummel mit mindestens einem Eingriffselement ausgestattet ist, in das ein komplementäres Eingriffselement, das, z. B. über eine Antriebswelle, in Wirkverbindung mit einem Antrieb bringbar ist oder steht einführbar ist.

Das komplementäre Eingriffselement ist zur Übertragung eines Drehmoments auf die Schließldappe des Kupplungsverschlusses ausgelegt und geeignet, die Drehbewegung der Antriebswelle auf die Schließklappe durch Wechselwirkung mit dem Eingriffselement der Partialwelle oder des -wellenstummels zu übertragen.

Bevorzugt ist hierbei unter anderem eine solche Ausführungsform, bei der die Partialwelle oder der -wellenstummel mit einer Stirnfläche in axialer Richtung ausgestattet ist, in bzw. auf der das Eingriffselement vorliegt, das axial in ein komplementäres Eingriffselement, das in Wirkverbindung mit einem Antrieb bringbar ist oder steht, einführbar ist.

Dabei kann vorgesehen sein, daß die Schließklappe auf ihrer Außenseite mit mindestens einem Dichtungsabschnitt oder mindestens einer, insbesondere umlaufenden, Dichtung versehen ist, die zumindest abschnittsweise am oder benachbart zum Umfangsrand angeordnet ist.

Hierbei sind solche Ausführungsformen von Vorteil, bei denen die Dichtungsabschnitte kreissegmentförmig und/oder rotationssymmetrisch angeordnet sind und/oder die gleiche Länge aufweisen.

Solche erfindungsgemäßen Kupplungsverschlüsse sind besonders praktikabel, bei denen die Schließklappe auf ihrer Außenseite zwei über diese Außenseite hervorstehende Dichtungsabschnitte verfügt, die in der Weise geformt und dimensioniert sind, daß mit einem im wesentlichen identischen Satz an Dichtungsabschnitten eine im wesentlich durchgängig umlaufende Dichtung erhältlich ist. Derartige Kupplungsverschlüsse sind geeignet, mit baugleichen Kupplungsverschlüssen eine umweltdichte erfindungsgemäße Andockeinrichtung auszubilden, bei der ein umlaufender Dichtungsring zwischen den Außenseiten der Schließklappen der beiden Kupplungsverschlüsse vorliegt. Geeigneterweise unterteilt man die umlaufende Dichtung der Andockeinrichtung in vier gleich lange Dichtungsabschnitte, von denen zwei von einem ersten Kupplungsverschluß und zwei weitere von einem zweiten Kupplungsverschluß zur Verfügung gestellt werden. Zweckmäßigerweise beginnt der erste Dichtungsabschnitt des ersten Kupplungsverschlusses im Bereich der Drehachse, d.h. benachbart zu einem Wellenstummel, und erstreckt sich über einen Umfangswinkel von 90°. Der zweite Dichtungsabschnitt beginnt dann an der Drehachse des gegenüberliegenden Wellenstummels und erstreckt sich wiederum über einen Umfangswinkel von 90°. Selbstverständlich ist es ebenfalls möglich, für die Ausbildung einer erfindungsgemäßen Andockeinrichtung zwei identische Kupplungsverschlüsse zu verwenden, bei denen auf der Außenseite der Schließklappe eine umlaufende Dichtung vorliegt, die permanent über der Außenseite hervorsteht. Bei gegenseitiger Anlage dieser Kupplungsverschlüsse über ihre Verschlußseiten kommen dann diese beiden Dichtungsringe gegeneinander zur Anlage. Bei solchen Systemen kann regelmäßig das Ausmaß des Hervortretens des Dichtungsrings über die Außenseite hinaus abgeschwächter ausgeprägt sein.

Erfindungsgemäß kann weiter vorgesehen sein, daß der Rohrstutzen innenseitig zumindest bereichsweise, insbesondere vollumfänglich, mit einer Rohrstutzendichtung ausgestattet ist.

Eine weitere vorteilhafte Ausgestaltung sieht vor, daß die Außenseite der Schließklappe in der Schließstellung zumindest abschnittsweise mit dem der Verschlußseite zugewandten Rand des Rohrstutzens oder die Rohrstutzendichtung im wesentlichen fluchtend anordbar ist.

Gemäß einer weiteren Ausgestaltung kann vorgesehen sein, daß mindestens eine Partialwelle bzw. ein -wellenstummel auf der der Verschlußseite zugewandten Seite zumindest abschnittsweise Auslassungen zum Eingriff für komplementäre Partialwellen bzw. - wellenstummel aufweist, insbesondere zumindest abschnittsweise in Form einer Halbachse vorliegt.

Bevorzugt ist bzw. sind das/die Lager in Form von zur Verschlußleiste hin offenen Halbschalen ausgebildet. Bevorzugt sind ferner solche Lager- bzw. Lagerschalen, die Nut-Feder-Wechselwirkungen mit der Partialwelle bzw. dem -wellenstummel zulassen, so daß diese Partialwelle bzw. dieser -wellenstummel sowie die damit verbundene Schließklappe stets sicher in dem Rohrstutzen vorliegen und jedenfalls bei gattungsgemäßen Verbrauch unverlierbar mit diesem verbunden sind.

Dabei kann vorgesehen sein, daß in Schließstellung die Außenseite der Schließklappe und die nicht in dem Lager gelagerte, insbesondere abgeflachte, Seite der Partialwelle bzw. des - wellenstummels zumindest bereichsweise fluchtend anordbar oder angeordnet sind.

Das Eingriffelement stellt mindestens eine Nut und/oder mindestens einen Vorsprung, insbesondere einen Dorn dar. Das Eingriffselement ist im allgemeinen derart auszugestalten, daß es für eine Kraftübertragung und damit eine Verschwenkung der Schließklappe in Frage kommt.

Selbstverständlich sind mit den erfindungsgemäßen Kupplungsverschlüssen auch solche umfaßt, die, insbesondere über ihre Rohrstutzen, bereits mit einem Behälter oder Fördermittel, z.B. einen Schlauch oder Rohr, dichtend verbunden oder verbindbar sind. Hierbei kann der Rohrstutzen unter anderem auch Bestandteil des Behälters oder Fördermittels sein oder sogar einstückig mit diesem Behälter oder Fördermittel vorliegen.

Von besonderem Vorteil sind solche erfindungsgemäßen Kupplungsverschlüsse, bei denen das Lager, insbesondere ein in dem Rohrstutzen vorliegender Lagerschaleneinsatz, mindestens bereichsweise, insbesondere vollständig, aus mindestens einem Kunststoffmaterial, insbesondere aus Polyamid, Polyetherketon (PEK), Polyetheretherketon (PEEK), Polyetherimid, Polybutylenterephthalat (PBT), Polyketonen, Polyimiden, Polyphenylenether, Polyaryletherketonen, Polyacrylnitril, Polyvinylchlorid, Polyolefinen und/oder Polyoxymethylen, gefertigt ist. Somit ist es möglich, das Lager bzw. die Lagerschale separat und in einem anderen Material auszuführen als den Rohrstutzen. Indem man für das Lager bzw. die Lagerschale ein Kunststoffmaterial wählt, insbesondere ein abriebsfestes Kunststoffmaterial, wie vorangehend ausgeführt, ist es möglich, die gesamte Kupplungsvorrichtung und damit auch die aus zwei solchen Kupplungsvorrichtungen gebildete erfindungsgemäßen Andockeinrichtung vollständig schmiermittelfrei zu betreiben. Dieser Aspekt ist für den dauerhaft kontaminationsfreien Transfer von empfindlichen Schüttgut, bei dem selbst geringste Verunreinigungen zu vermeiden sind, beispielsweise bei pharmazeutischen Anwendungen, von nicht geringer Bedeutung.

In einer weiteren Ausführungsform verfügen erfindungsgemäße Kupplungsverschlüsse zudem über durch mindestens einen, insbesondere zwei, Anschläge, an den Seitenflächen des Rohrstutzens benachbart zu mindestens einem Lager. Indem der Anschlag über die Seitenwandung des Rohrstutzens hinausragt, kann in Wechselwirkung mit einer Führeinrichtung eine positionsgenaue Justierung der Partialwelle bzw. des -wellenstummels vor der Antriebswelle eines Antriebs vorgenommen werden. Dieses gelingt insbesondere dann besonders gut, wenn der Anschlag bzw. die Anschläge zur Justierung in zwei Dimensionen ausgelegt ist. Hierbei ist zum einen die Positionierung in axialer Richtung diesseits und jenseits der sich gegenüberliegenden Partialwellen bzw. -wellenstummel und zum anderen die seitliche Justierung in der Ebene der Schließklappe bei verschlossener Position von Vorteil.

Gemäß einer Weiterentwicklung der erfindungsgemäßen Kupplungsverschlüsse kann vorgesehen sein, daß das Eingriffselement und/oder die Partialwelle oder der -wellenstummel mindestens ein Partialarretierelement geeignet zur Ausbildung eines ersten Arretierelements mit einem Partialarretierelement eines korrespondierenden Kupplungsverschlusses aufweist. Indem man die Partialwellen oder -wellenstummel oder die Eingriffselemente des Kupplungsverschlusses mit Partialarretierelementen versieht, kann bereits durch das Ineingriffbringen der Eingriffselemente zweier korrespondierender, eine Andockeinrichtung bildenden Kupplungsverschlüsse sichergestellt werden, daß diese bzw. deren Schließklappen während des gesamten Schüttguttransfers dicht gegeneinander verriegelt bzw. arretiert bleiben.

Besonders bevorzugt ist hierbei vorgesehen, daß das Partialarretierelement zumindest abschnittsweise eine der Behälterseite zugewandte, insbesondere in Bezug auf die Drehachse der Schließklappe radiale, Anlagefläche, und/oder in der Stirnseite von Partialwelle oder - wellenstummel eine zumindest abschnittsweise, insbesondere radial umlaufende, Nut oder Feder umfaßt, geeignet zur Anlage bzw. Aufnahme zumindest eines Teils eines korresponderienden zweiten Arretierelements unter Ausbildung einer Arretiereinheit. Eine besonders zweckmäßige Ausgestaltung zeichnet sich dadurch aus, daß das Partialarretierelement Bestandteil des Eingriffselements ist. Ist das Eingriffselement des Kupplungsverschlusses beispielsweise eine Nut oder eine Teilnut, kann das Partialarretierelement darin als Ausbuchtung, Erhebung oder keilförmiger Fortsatz mit einer angeschrägten Fläche vorliegen, über die Kraft in Richtung der Verschlußseite des Kupplungsverschlusses beaufschlagt werden kann.

In einer besonders zweckmäßigen Ausgestaltung der erfindungsgemäßen Kupplungsverschlüsse ist ferner vorgesehen, daß die Schließklappe über eine erste Partialwelle oder einen ersten Partialwellenstummel, die bzw. der mit keinem oder mit mindestens einem Eingriffselement ausgestattet ist, in das ein komplementäres Eingriffselement, das in Wirkverbindung mit einem Antrieb bringbar ist oder steht oder das nicht in Wirkverbindung mit einem Antrieb bringbar ist oder steht, einführbar ist, und/oder, längs der schwenkbaren Achse, über eine zweite Partialwelle oder einen zweiten Partialwellenstummel verfügt, die bzw. der mit keinem oder mit mindestens einem zweiten Eingriffselement ausgestattet ist, in das ein komplementäres Eingriffselement, das in Wirkverbindung mit einem Antrieb bringbar ist oder steht oder das nicht in Wirkverbindung mit einem Antrieb bringbar ist oder steht, einführbar ist, wobei mindestens eine Partialwelle oder ein wellenstummel mit mindestens einem Eingriffselement ausgestattet ist, in das ein komplementäres Eingriffselement, das in Wirkverbindung mit einem Antrieb bringbar ist oder steht, einführbar ist.

Hierbei ist besonders bevorzugt, daß mindestens eine Partialwelle bzw. mindestens ein - wellenstummel, insbesondere sämtliche Partialwellen oder -wellenstummel, einstückig mit der Schließklappe verbunden sind bzw. vorliegen. Eine Partialwelle bzw. Partialwellenstummel ist im Sinne der vorliegenden Erfindung insbesondere dann mit der Schließklappe einstückig verbunden bzw. liegt einstückig mit dieser vor, wenn die Partialwelle bzw. der Partialwellenstummel nicht länger zerstörungsfrei von der Schließklappe getrennt werden kann. Dieses kann beispielsweise dann der Fall sein, wenn die Partialwelle bzw. die Partialwellenstummel mit der Schließklappe in einem Verfahrensgang, z.B. einem Guss, gefertigt worden ist oder wenn die Partialwelle oder der Partialwellenstummel an die Schließklappe angelötet oder angeschweißt worden ist.

Gemäß einer weiteren Ausgestaltung kann vorgesehen sein, dass daß die Stirnfläche der Partialwelle bzw. des wellenstummels, in bzw. auf der das Eingriffselement vorliegt, im wesentlichen flach ausgestaltet ist.

Die der Erfindung zugrunde liegende Aufgabe wird des weiteren durch eine Andockeinrichtung zum, insbesondere umweltisolierten, Umfüllen, Befüllen und/oder Entleeren von Behältnissen gelöst, umfassend über ihre jeweiligen Verschlußseiten aneinander bündig anlegbare oder anliegende erste und zweite Kupplungsverschlüsse erfindungsgemäße wobei die Außenseiten der jeweiligen Schließklappen aneinander anliegen oder aneinander zur Anlage bringbar sind und in aneinander angelegtem Zustand aus einer Schließstellung, in der sie den durch den Rohrstutzen des ersten Kupplungsverschlusses und den Rohrstutzen des zweiten Kupplungsverschlusses gebildeten Transferkanal verschließen, um eine gemeinsame Achse in eine Öffnungsstellung schwenkbar sind.

Besonders bevorzugt sind hierbei zumindest der Rohrstutzen, die Rohrstutzendichtung, die Schließklappe und/oder die Partialwelle bzw. der -wellenstummel von erstem und zweitem Kupplungsverschluß, insbesondere der erste und zweite Kupplungsverschluß, im wesentlichen baugleich.

Dabei kann unter anderem auch vorgesehen sein, daß die Rohrstutzen, insbesondere die Rohrstutzendichtungen, von erstem und zweitem Kupplungsverschluß bei Anlage derselben gegeneinander bündig abschließen.

Besonders zweckmäßige Ausgestaltungen der erfindungsgemäßen Andockeinrichtung zeichnet sich dadurch aus, daß die erste Partialwelle oder der erste Partialwellenstummel des ersten Kupplungsverschlusses mit der komplementären ersten Partialwelle bzw. dem komplementären ersten Partialwellenstummel des zweiten Kupplungsverschlusses eine erste Welle oder eine einen ersten Wellenstummel ausbildet, wobei die erste Partialwelle oder der erste Partialwellenstummel des ersten Kupplungsverschlusses mit keinem oder mit mindestens einem Eingriffselement ausgestattet ist, in das ein komplementäres Eingriffselement, das in Wirkverbindung mit einem Antrieb bringbar ist oder steht oder das nicht in Wirkverbindung mit einem Antrieb bringbar ist oder steht, einführbar ist, und/oder daß die erste Partialwelle oder der erste Partialwellenstummel des zweiten Kupplungsverschlusses mit keinem oder mit mindestens einem Eingriffselement ausgestattet ist, in das ein komplementäres Eingriffselement, das in Wirkverbindung mit einem Antrieb bringbar ist oder steht oder das nicht in Wirkverbindung mit einem Antrieb bringbar ist oder steht, einführbar ist, und/oder daß die zweite Partialwelle oder der zweite Partialwellenstummel des ersten Kupplungsverschlusses bei Anlage mit der komplementären zweiten Partialwelle bzw. dem komplementären zweiten Partialwellenstummel des zweiten Kupplungsverschlusses eine Welle oder einen Wellenstummel ausbildet, wobei die zweite Partialwelle oder der zweite Partialwellenstummel des ersten Kupplungsverschlusses mit keinem oder mit mindestens einem Eingriffselement ausgestattet ist, in das ein komplementäres Eingriffselement, das in Wirkverbindung mit einem Antrieb bringbar ist oder steht oder das nicht in Wirkverbindung mit einem Antrieb bringbar ist oder steht, einführbar ist, und/oder daß die zweite Partialwelle oder der zweite Partialwellenstummel des zweiten Kupplungsverschlusses mit keinem oder mit mindestens einem Eingriffselement ausgestattet ist, in das ein komplementäres Eingriffselement, das in Wirkverbindung mit einem Antrieb bringbar ist oder steht oder das nicht in Wirkverbindung mit einem Antrieb bringbar ist oder steht, einführbar ist, wobei mindestens eine erste oder zweite Partialwelle oder mindestens ein erster oder zweiter Partialwellenstummel von erstem oder zweitem Kupplungsverschluß mit mindestens einem Eingriffselement ausgestattet ist, in das ein komplementäres Eingriffselement, das in Wirkverbindung mit einem Antrieb bringbar ist oder steht, einführbar ist.

Hierbei sind solche Ausgestaltungen bevorzugt, bei denen die Eingriffselemente der komplementären ersten Partialwellen bzw. Partialwellenstummel von erstem und zweitem Kupplungsverschluß bei gegenseitiger Anlage ein einheitliches Eingriffselement, insbesondere eine einheitliche Nut oder Ferder, bilden und/oder daß die Eingriffselemente der komplementären zweiten Partialwellen bzw. Partialwellenstummel von erstem und zweitem Kupplungsverschluß bei gegenseitiger Anlage ein einheitliches Eingriffselement, insbesondere eine einheitliche Nut oder Feder, bilden, jeweils geeignet zur Aufnahme eines komplementären einheitlichen, insbesondere einzigen, Eingriffselements, das nicht oder das in Wirkverbindung mit einem Antrieb bringbar ist oder steht.

In einer weiteren bevorzugten Ausgestaltung ist vorgesehen, daß das einheitliche Eingriffselement der gegenseitig bzw. aneinander anliegenden ersten Partialwelle bzw. ersten Partialwellenstummel und/oder das einheitliche Eingriffselement der gegenseitig bzw. aneinander anliegenden zweiten Partialwellen bzw. Partialwellenstummel in einem komplementären einheitlichen Eingriffselement vorliegen oder in dieses einführbar sind, das in Wirkverbindung mit einem Antrieb bringbar ist oder steht.

Mit den erfindungsgemäßen Andockeinrichtungen gelingt es erstmalig, Andockeinrichtungen für den vorzugsweise umweltlichen Transfer von Schüttgut, gebildet aus zwei Kupplungsverschlüssen, die jeweils mit einer schwenkbaren Schließklappe ausgestattet sind, verfügbar zu machen, bei denen die Unterscheidung zwischen einer sogenannten Aktivklappe und einer sogenannten Passivklappe aufgehoben ist. Bei Andockeinrichtungen aus dem Stand der Technik wird ein solcher Kupplungsverschluss als Aktivklappe bezeichnet, der mit dem Antrieb verbunden bzw. verbindbar ist. Hingegen verfügt die Passivklappe bei solchen konventionellen Andockeinrichtungen über keine direkte Wirkverbindung mit dem Antrieb. Vielmehr wird die Passivklappe stets über die anliegende Aktivklappe mit bewegt. Die mit einer solchen Drehmomentübertragung einhergehenden Nachteile, wie Spaltbildung, Undichtigkeit und ungleichmäßige Kraftbeaufschlagung und damit einhergehender Verschleiß, treten bei den erfindungsgemäßen Andockeinrichtungen nicht mehr auf. Hierbei sind solche Andockeinrichtungen besonders bevorzugt, bei denen die Eingriffselemente komplementärer Partialwellen oder -wellenstummel bei gegenseitiger Anlage ein einheitliches Eingriffselement bilden, z.B. eine einheitliche Nut oder eine einheitliche Feder. Diese einheitlichen Eingriffselemente können besonders zuverlässig in ein komplementäres einheitliches Eingriffselement, das mit dem Antrieb in Wirkverbindung steht, z.B. über eine Welle, eingeführt werden. Auf diese Weise erhält man z.B. passgenaue ineinander einfügbare Nut/Feder - bzw. Feder/Nut-Systeme, je nachdem, ob die durch die beiden Eingriffselemente in den Partialwellen gebildeten einheitlichen Eingriffselemente eine einheitliche Nut oder eine einheitliche Feder bildet.

Dabei kann unter anderem auch vorgesehen sein, daß die Rohrstutzen, insbesondere die Rohrstutzendichtungen, von erstem und zweitem Kupplungsverschluß bei Anlage derselben gegeneinander bündig abschließen.

Vorzugsweise sind bei den erfindungsgemäßen Andockeinrichtungen die Schließklappen der zum Einsatz kommenden Kupplungsverschlüsse im wesentlichen identisch dimensioniert sowie insbesondere im wesentlichen kreisförmig ausgebildet.

Eine zweckmäßige Weiterbildung sieht ferner vor, die Partialwellen bzw. -wellenstummel von erstem und zweitem Kupplungsverschluß unter Ausbildung einer Welle oder eines Wellenstummels in den durch die Lagerschalen von erstem und zweitem Kupplungsverschluß gebildeten Lagern um eine gemeinsame Achse schwenkbar sind.

Zur leichteren Handhabung der erfindungsgemäßen Andockeinrichtungen können diese ferner mindestens eine Führungsvorrichtung für mindestens eine Partialwelle oder einen - wellenstummel mindestens einer Schließklappe aufweisen.

Besonders vorteilhaft sind solche Andockeinrichtungen, bei denen die Eingriffselemente der eine Welle oder einen Wellenstummel bildenden Partialwellen bzw. -wellenstummel ein einheitliches Eingriffselement für ein korrespondierendes Eingriffselement einer Antriebswelle, insbesondere in Form einer Nut oder eines Doms, bilden.

Zweckmäßigerweise können die erfindungsgemäßen Andockeinrichtungen zudem über mindestens eine Antriebswelle oder eine mit einem Antrieb in Wirkverbindung bringbare Welle verfügen, die mit mindestens einem Eingriffselement ausgestattet ist, das komplementär zu mindestens einem Eingriffselement von erstem oder zweitem Kupplungsverschluß, insbesondere zu dem einheitlichen Eingriffselement von erstem und zweitem Kupplungsverschluß, ist, so daß bei Eingriff dieser einander komplementären Eingriffselemente die aneinander anliegenden Schließklappen über den Antrieb schwenkbar sind.

Hierbei kann auch eine Antriebswelle mit umfaßt sein, die in Wirkverbindung mit dem Antrieb steht. Diese Antriebswelle ist vorzugsweise in einem dem Antrieb insbesondere vorgelagerten Wellenlager gelagert.

Insbesondere wenn baugleiche erfindungsgemäße Kupplungsverschlüsse für die erfmdungsgemäße Andockeinrichtung verwendet werden sollen, ist von Vorteil, daß die Dichtungen der Schließklappen von erstem und zweitem Kupplungsverschluß jeweils nur abschnittsweise über deren Außenseiten hervorstehen, wobei diese Abschnitte der Dichtungen von erstem und zweitem Kupplungsverschluß bei aneinander anliegenden Außenseiten der Schließklappen eine im wesentlichen durchgängige Dichtung ausbilden.

Ein besonders sicheres Arbeiten mit der erfindungsgemäßen Andockeinrichtung gelingt insbesondere dadurch, daß die Rohrstutzen von erstem und zweitem Kupplungsverschluß, insbesondere auf jeweils einander gegenüberliegenden Bereichen der Seitenwände oder benachbart hierzu, über Kraftbeaufschlagungspunkte, beispielsweise Vorsprünge oder Fortsätze, verfügen, über die im gekuppelten Zustand die Außenseiten von erstem und zweitem Kupplungsverschluß gegeneinander preßbar und/oder die Rohrstutzen von erstem und zweitem Kupplungsverschluß gegeneinander reversibel arretierbar sind.

Hierbei verwendet man vorzugsweise eine Verriegelungseinheit, mit der aus im wesentlichen einander gegenüberläufigen Richtungen, insbesondere jeweils aus behälterseitiger Richtung, die Kraftbeaufschlagungspunkte von erstem und zweitem Kupplungsverschluß mit Kraft beaufschlagbar sind. Eine solche erfindungsgemäße Verriegelungseinheit, die geeignet ist für die Verriegelung zweier Rohrstutzen von erfindungsgemäßen Kupplungsverschlüssen, umfaßt einen um eine Achse drehbaren Körper mit einer Verriegelungsseite, wobei auf der Verriegelungsseite des Körpers mindestens ein erstes hervortretendes Element und mindestens ein zweites hervortretendes Element angebracht sind oder vorliegen, wobei das erste und das zweite Element zumindest bereichsweise in einer Ebene liegen, die im wesentlichen einen Winkel zur Drehachse aufweist, insbesondere senkrecht zur Drehachse steht, wobei das erste Element und das zweite Element jeweils einen Abstand zur Drehachse aufweisen, der kleiner ist als der Abstand von erstem und zweitem Element zueinander, und wobei die ersten und zweiten Elemente durch Rotation des Körpers um die Drehachse von einer Verriegelungsstellung in eine Öffnungsstellung und umgekehrt bringbar sind.

Bei dem drehbar um eine Achse gelagerten Körper kann es sich beispielsweise um eine Strebe oder eine drehbar gelagerte Scheibe handeln. Die Drehachse dieses Körpers steht vorzugsweise senkrecht auf der durch die Verriegelungsseite des Körpers aufgespannten Fläche und ist von dieser Verriegelungsseite abgewandt orientiert. Diese Drehachse schneidet die Verbindungsseite in einem Punkt, wobei dieser Schnittpunkt der Drehachse mit der Verbindungsseite zwischen dem ersten und zweiten Element liegt und insbesondere auf der Verbindungslinie von erstem und zweitem Element. Die einander gegenüberliegenden ersten und zweiten Elemente der Verriegelungseinheit sind jeweils vorzugsweise mit Druckbeaufschlagungsflächen, vorzugsweise in zumindest abschnittsweise konkav gewölbter Form, ausgestattet. Die zur Verriegelung zweier Kupplungsverschlüsse einzusetzenden Kräfte sind bei solchen Verriegelungseinheiten besonders gering, bei denen das erste und/oder zweite Element in Form einer Rolle bzw. Zylinder, vorzugsweise in Form einer um eine Achse drehbar gelagerten Rolle bzw. eines um eine Achse drehbar gelagerten Zylinders gestaltet ist bzw. sind. Die Drehachse dieser Rollen bzw. eines Zylinders ist vorzugsweise im wesentlichen parallel zur Drehachse des Körpers ausgerichtet.

Eine besonders praktikable Ausführungsform einer erfindungsgemäßen Andockeinrichtung umfaßt ferner eine Arbeits- bzw. Andockplattform, auf der mindestens ein, insbesondere zwei Antriebe sowie gegebenenfalls mindestens eine, insbesondere zwei Verriegelungseinheiten und/oder mindestens ein, insbesondere zwei Wellenlager für eine Antriebswelle angebracht sind.

Des weiteren können erfindungsgemäße Andockeinrichtungen dadurch gekennzeichnet sein, daß der Rohrstutzen von erstem und/oder zweitem Kupplungsverschluß im Bereich der Partialwellen oder -wellenstummel mindestens einen Anschlag und/oder mindestens eine Führeinrichtung für das Wellenlager der Antriebswelle oder den Antrieb aufweist.

Eine Weiterentwicklung der erfindungsgemäßen Andockeinrichtung zeichnet sich dadurch aus, daß die Eingriffselemente und/oder die Partialwellen oder die wellenstummel von erstem und zweitem Kupplungsverschluß jeweils mindestens ein Partialarretierelement geeignet zur Ausbildung eines ersten Arretierelements aufweisen und daß das komplementäre Eingriffselement oder die Antriebswelle ein zu dem ersten Arretierelement korrespondierendes zweites Arretierelement aufweist und daß durch Relativbewegung von erstem und zweitem Arretierelement aufeinander zu eine Arretiereinheit ausbildbar ist, wodurch die ersten und zweiten Kupplungsverschlüsse gegeneinander pressbar und/oder arretierbar sind. Diese Ausgestaltung nutzt den Umstand, daß für die Betätigung der aneinander anliegenden Schließklappen der angedockten Kupplungsverschlüsse die Eingriffselemente der Partialwellen bzw. -wellenstummel bzw. der aus diesen gebildeten Gesamtwelle bzw. -wellenstummel mit dem komplementären Eingriffselement der Antriebswelle in Eingriff zu bringen ist. Indem nun Partialarretierelemente bei den jeweiligen Kupplungsverschlüssen vorgesehen werden, die gemeinsam ein erstes Arretierelement ausbilden, das mit einem hierzu korrespondierenden zweiten Arretierelement der Antriebswelle bzw. des komplementären Eingriffselements unter Ausbildung einer Arretiereinheit wechselwirken kann, kann allein durch den geschilderten Vorgang des Ineingriffbringens der Eingriffselemente eine Arretierung bzw. ein Aneinanderpressen der Kupplungsverschlüsse bzw. der Außenseiten der aneinander anliegenden Schließklappen bewerkstelligt werden. Auf diese Weise wird zwangsläufig sichergestellt, daß beim Betrieb der erfindungsgemäßen Andockeinrichtung die jeweiligen Kupplungsverschlüsse stets fest arretiert aneinander vorliegen.

In einer bevorzugten Ausführungsform umfassen die Partialarretierelemente von erstem und zweitem Kupplungsverschluß jeweils zumindest abschnittsweise eine der Behälterseite zugewandte, insbesondere in Bezug auf die gemeinsame Drehachse der Schließklappen radiale, Anlagefläche und/oder in den Stirnseiten der Partialwellen oder wellenstummel eine, insbesondere jeweils zumindest abschnittsweise radial umlaufende, Nut und/oder Feder. Besonders bevorzugt bilden bei dieser Ausführungsform die Partialarretierelemente im Querschnitt gewölbte, insbesondere halbkreisförmige Anlageflächen aus. Im angedockten Zustand bilden diese Anlageflächen der Partialarretierelemente von erstem und zweitem Kupplungsverschluß vorzugsweise eine zylinderförmige Gestalt in Form des ersten Arretierelements aus. Bei dem hierzu korrespondierenden zweiten Arretierelement handelt es sich dann vorzugsweise um eine an oder auf der Antriebswelle vorliegende zylinderförmige Hülse, in die das erste Arretierelement, insbesondere paßgenau, eingeführt werden kann. Hierbei sind der Innendurchmesser des zweiten Arretierelements und der Außendurchmesser des ersten Arretierelements in für den Fachmann bekannter Weise aufeinander abzustimmen, um ein stets störungsfreies reversibles Arretieren und Lösen zu bewerkstelligen, ohne Einbußen bei der Funktion des Arretierens hinnehmen zu müssen. Ein weiterer Vorteil bei der Verwendung eines zweiten Arretierelements, das das erste Arretierelement im wesentlichen aufnimmt, ist, daß nicht nur ein Entkoppeln der angedockten Kupplungsverschlüsse des Transfervorgangs verhindert wird, sondern daß zusätzlich ein seitliches Verschieben der Kupplungsverschlüsse gegeneinander ausgeschlossen wird. Auf diese Weise wird die Betriebssicherheit nochmal um ein weiteres erhöht.

Alternativ kann, wie vorangehend dargestellt, in der Stirnseite, beispielsweise umlaufend, von Partialwelle bzw. -wellenstummel eine Feder oder Nut vorliegen, die in eine korrespondierende Feder bzw. Nut im Bereich der Stirnfläche der Antriebswelle beim Ineingriffbringen der korrespondierenden Eingriffselemente ebenfalls ineinander geführt werden können. Auch bei dieser Konstruktion kann neben der Entkopplungsbewegung gleichfalls ein seitliches Verschieben der Kupplungsverschlüsse unterbunden werden.

Eine weitere vorteilhafte Ausgestaltung sieht vor, daß die Partialarretierelemente von erstem und zweitem Kupplungsverschluß Bestandteil der Eingriffselemente von erstem bzw. zweitem Kupplungsverschluß sind und insbesondere ein erstes Arretierelement, insbesondere in Form eines Keils, Kegels oder Kegelstumpfes, ausbilden. Die Partialarretierelemente ermöglichen bei dieser Variante eine Kraftbeaufschlagung beim Ineingriffbringen der korrespondierenden Eingriffselemente jeweils in Richtung der Verschlußseite des zugehörigen Kupplungsverschlusses. Auf diese Weise werden beim Ineingriffbringen der Eingriffselemente die Kupplungsverschlüsse gegeneinander gepreßt.

Insbesondere in Bezug auf die vorangehend geschilderte Ausführungsform ist von Vorteil, wenn die Stirnfläche des komplementären Eingriffselements in einem Winkel zueinander stehende und einander zugewandte erste und zweite Kontaktflächen aufweist, wobei bei axialer Relativbewegung des komplementären Eingriffselements zum Ineingriffbringen der Eingriffselemente bzw. des Gesamteingriffselements von erstem und zweitem Kupplungsverschluß mit dem komplementären Eingriffselement die erste Kontaktfläche des komplementären Eingriffselements mit dem Eingriffselement des ersten Kupplungsverschlusses in Berührung bringbar ist und die zweite Kontaktfläche des komplementären Eingriffselements mit dem Eingriffselement des zweiten Kupplungsverschlusses in Berührung bringbar ist, wodurch die ersten und zweiten Kupplungsverschlüsse gegeneinander preßbar und/oder arretierbar sind.

Erfindungsgemäß kann ferner vorgesehen sein, daß die Partialwellen oder wellenstummel des ersten und zweiten Kupplungsverschlusses jeweils zumindest bereichsweise über eine, insbesondere in Bezug auf die Drehachse radiale, Anschlagsfläche als Partialarretierelemente verfügen, die unter Ausbildung eines ersten Arretierelements zumindest bereichsweise voneinander weg und zur jeweiligen Behälterseite des Kupplungsverschlusses weisen, und daß das komplementäre Eingriffselement und/oder die Antriebswelle als korrespondierendes zweites Arretierelement stirnseitig über einander im wesentlichen gegenüberliegende und einander zumindest bereichsweise zugewandte, insbesondere in Bezug auf die Drehachse radiale, Kontaktflächenabschnitte verfügen, durch die beim Ineingriffbringen der Eingriffselemente bzw. des Gesamteingriffselements von erstem und zweiten Kupplungsverschluß mit dem komplementären Eingriffselement durch Wechselwirkung mit den Anschlagsflächen von erstem und zweitem Kupplungsverschluß diese gegeneinander preßbar und/oder arretierbar sind.

Hierbei kann vorgesehen sein, daß das korrespondierende zweite Arretierelement einen, insbesondere zumindest abschnittsweise das komplementäre Eingriffselement umgebenden, Zylinderabschnitt umfaßt.

Die vorangehend dargestellte Weiterentwicklung einer erfindungsgemäßen Andockeinrichtung macht den Einsatz separater Verriegelungseinheiten, mit denen die angedockten Kupplungsverschlüsse während des Schüttguttransfers gegeneinander gehalten werden, überflüssig. Dieses stellt sowohl konstruktiv als auch verfahrensseitig eine Vereinfachung dar, ohne jedoch Einbußen bei der Betriebssicherheit hinnehmen zu müssen. Indem bei jedem Ineingriffbringen der korrespondierenden Eingriffselemente von Gesamtwelle bzw. - wellenstummel und der Antriebswelle zwangsläufig eine Arretierung bzw. ein Aneinanderpressen der angedockten Kupplungsverschlüsse eintritt, wird die Gefahr von Betriebsstörungen vielmehr nochmals verringert.

Selbstverständlich ist es ebenfalls möglich, die geschilderten Arretiereinheiten auf beiden Seiten der Drehachse, d.h. bei beiden Wellen bzw. Wellenstummeln vorzusehen, und zwar insbesondere auch dann, wenn die gekoppelten Schließklappen der angedockten Kupplungsverschlüsse nicht nur über einen Antrieb, sondern über zwei Antriebe, die jeweils an gegenüber liegenden Seiten der Drehachse vorliegen, gedreht werden.

Die der vorliegenden Erfindung zugrunde liegende Aufgabe wird des weiteren gelöst durch eine Arbeits- bzw. Andockplattform, auch Öffnungswerkzeug genannt, für eine Andockeinrichtung zum, insbesondere umweltdichten Transfer von Schüttgut, umfassend mindestens einen, insbesondere zwei auf einer Plattform angebrachte Antriebe, eine Durchgangsöffnung in der Plattform für einen Kupplungsverschluß einer Andockeinrichtung sowie gegebenenfalls mindestens eine, insbesondere mindestens zwei Verriegelungseinheiten für die Arretierung und/oder das Zusammenpressen der Außenseiten von Schließklappen angedockter Kupplungsverschlüsse einer Andockeinrichtung und/oder mindestens ein Wellenlager für eine Antriebswelle, die mit dem Antrieb in Wirkverbindung steht. Besonders bevorzugt umfaßt diese Arbeitsplattform ferner mindestens einen erfindungsgemäßen Kupplungsverschluß. Die Andockplattform verfügt somit gemäß den vorangehenden Ausführungen auf einer Seite über mindestens einen Antrieb sowie gegebenenfalls mindestens eine Verriegelungseinheit und/oder mindestens ein Wellenlager. Diese Baueinheiten sind im allgemeinen fest mit der Plattform der Andockplattform verbunden, so daß die Andockplattform in jeder beliebigen Position zum Einsatz kommen kann. Beispielsweise können die genannten Baueinheiten auf der Plattform aufliegen oder diese Plattform kann um 180° gedreht sein, so daß diese Baueinheiten hängend befestigt sind. Selbstverständlich kann neben der beschriebenen, im wesentlichen horizontalen Ausrichtung die Plattform für den Transfervorgang zwischen zwei gekuppelten Kupplungsverschlüssen auch eine vertikale Anordnung einnehmen. Ferner kann in einer weiteren Ausgestaltung mindestens einer der Kupplungsverschlüsse bereits fest mit der Plattform verbunden sein. Die Plattform eignet sich z.B. in einer Ausführungsvariante zur festen Verbindung mit einem Container. Diese Ausführungsform wird bevorzugt dann gewählt, wenn ein Container mit kleineren Gebinden bzw. Gebinden mit kleiner Nennweite zu befüllen ist. Die Kupplungsverschlüsse dieser Gebinden lassen sich in der Regel unproblematisch mit dem bereits in der Arbeitsplattform vorliegenden Kupplungsverschluß verbinden, ohne die jeweiligen Einzelbestandteile zu beschädigen. Kommen jedoch größere und/oder schwerere Gebinde zum Einsatz oder solche mit Öffnungen größerer Nennweite, hat es sich als vorteilhaft erwiesen, die Andockplattform und/oder den in der Durchgangsöffnung der Arbeitsplattform vorliegenden Kupplungsverschluß flexibel bzw. schwimmend zu lagern. Beispielsweise kann der Kupplungsverschluß über einen elastischen Balg mit einem Container verbunden sein. Ferner ist es alternativ oder zusätzlich möglich, die Plattform mit elastischen Ständern bzw. Füßen zu versehen, um eine gewisse Flexibilität zu gewährleisten, so daß beim Andockvorgang zweier Kupplungsverschlüsse Ausweichbewegungen derselben möglich sind. In einer weiteren Ausgestaltung kann die erfindungsgemäße Andockplattform eine Hubeinrichtung aufweisen. Auf diese Weise gelingt es z.B., einen Kupplungsverschluß an einen korrespondierenden Kupplungsverschluß unter Ausbildung einer erfindungsgemäßen Andockeinrichtung, beispielsweise pneumatisch oder hydraulisch, heranzufahren.

Schließlich wird die der Erfindung zugrunde liegende Aufgabe gelöst durch ein Verfahren zum, insbesondere umweltisolierten, Umfüllen, Befüllen und/oder Entleeren von Behältnissen, umfassend die Schritte:
- Zurverfügungstellung eines ersten mit einem ersten Behältnis verbundenen erfindungsgemäßen Kupplungsverschlusses, wobei die Schließklappe sich in der Schließstellung befindet,
- Zurverfügungstellung eines zweiten mit einem zweiten Behältnis verbundenen erfindungsgemäßen Kupplungsverschlusses, wobei die Schließklappe sich in der Schließstellung befindet,
- Kuppeln der ersten und zweiten Kupplungsverschlüsse über ihre jeweiligen Verschlußseiten unter Ausbildung einer erfindungsgemäßen Andockeinrichtung,
- Inwirkverbindungbringen der Antriebswelle eines Antriebs mit der Welle der Andockeinrichtung unter Ineingriffbringen des Eingriffelements der Welle der Andockeinrichtung mit der komplementären Eingriffseinheit der Antriebswelle,
- Schwenken der aneinander anliegenden Schließklappen aus der Schließstellung in eine den Transferkanal zumindest teilweise freigebende Stellung durch Betätigen des Antriebs,
- Überführen von Schüttgut aus dem ersten Behältnis in das zweite Behältnis, oder umgekehrt,
- Schwenken der aneinander anliegenden Schließklappen in die Schließstellung durch Betätigen des Antriebs,
- Entkoppeln von erstem und zweitem Kupplungsverschluß unter Trennung der Andockeinrichtung.

Dabei kann vorgesehen sein, daß vor dem Schwenken der aneinander anliegenden Schließklappen aus der Schließstellung die gekoppelten Kupplungsverschlüsse der Andockeinrichtung durch mindestens eine, insbesondere mindestens zwei Kraftbeaufschlagungseinrichtungen gegeneinander arretiert und/oder gepresst werden und daß nach dem Schwenken der aneinander anliegenden Schließklappen zurück in die Schließstellung die Kraftbeaufschlagungseinrichtung die ersten und zweiten Kupplungsverschlüsse wieder freigibt.

Der vorliegenden Erfindung lag die überraschende Erkenntnis zugrunde, daß sich sehr kontaminationsarme und gleichzeitig anwendungsfreundliche Andockeinrichtungen durch Verwendung zweier Passivklappen erhalten lassen, die im gekoppelten Zustand über geeignete Arretierelemente mit einem separaten externen Antrieb um eine gemeinsame Achse verschwenkt werden können. Hierdurch wird es erstmalig ermöglicht, mit zwei im wesentlichen baugleichen Kupplungsverschlüssen ein funktionsfähiges Andocksystem zu erhalten. Demgemäß kann auf den Einsatz von speziell aufeinander abgestimmten Aktiv- und Passivklappen vollständig verzichtet werden. Überdies tritt bei den erfindungsgemäßen Andockeinrichtungen selbst bei Verwendung von Schließklappen mit sehr großen Nennweiten keine Spaltbildung mehr auf. Ein weiterer großer Vorteil der erfindungsgemäßen Kupplungsverschlüsse bzw. des erfindungsgemäßen Andocksystems gründet sich in der großen Handhabungsbreite. So kann erstmalig unproblematisch und ohne großen Aufwand Schüttgut von einem feststehenden Container in einen mobilen Container, oder umgekehrt, transferiert werden. Der Nutzer ist nicht mehr darauf festgelegt, darauf zu achten, eine Aktivklappe ausschließlich mit dem feststehenden Container zu verwenden und eine hierzu korrespondierende Passivklappe bereit zu halten. Hierdurch läßt sich unter anderem auch der Einsatz von Schläuchen oder Rohren zum Schüttguttransfer zwischen zwei Containern wenn nicht vermeiden, so doch jedenfalls zurückdrängen, womit sich wiederum der Reinigungsaufwand erheblich reduzieren läßt. Auch sind bei Verwendung von Schläuchen oder Rohren zum Transfer zwischen zwei Containern regelmäßig zwei separate Andocksysteme erforderlich gewesen. Hierauf kann bei Verwendung der erfindungsgemäßen Kupplungsverschlüsse und Andockeinrichtungen verzichtet werden.

Weitere Vorteile, Merkmale und Anwendungsmöglichkeiten der vorliegenden Erfindung ergeben sich aus der folgenden Beschreibung eines bevorzugten Ausführungsbeispiels in Verbindung mit den anliegenden Zeichnungen. In diesen Zeichnungen zeigen
- Figur 1: eine perspektivische Darstellung eines erfindungsgemäßen Kupplungsverschlusses, betrachtet von der Verschlußseite,
- Figur 2: eine perspektivische Draufsicht auf die Behälterseite des Kopplungsverschlusses gemäß Figur 1,
- Figur 3: eine perspektivische Draufsicht auf eine erfindungsgemäße Andockplattform,
- Figur 4: eine perspektivische Draufsicht auf einen Kupplungsverschluß gemäß Figur 1 und eine Andockplattform gemäß Figur 3,
- Figur 5: eine perspektivische Draufsicht auf eine erfindungsgemäßen Andockeinrichtung,
- Figur 6: eine perspektivische Draufsicht auf die Andockeinrichtung gemäß Figur 5 im vollständig angedockten, verschlossenen Zustand,
- Figur 7: eine perspektivische Draufsicht auf die Andockeinrichtung gemäß Figur 6 im geöffneten Zustand,
- Figur 8: eine perspektivische Draufsicht auf eine erfindungsgemäße Andockeinrichtung mitsamt Arbeitsplattform im noch nicht angedockten Zustand,
- Figur 9: eine perspektivische Seitenansicht eines erfindungsgemäßen Kupplungsverschlusses,
- Figur 10: eine perspektivische Seitenansicht einer erfindungsgemäßen Verriegelungseinheit und eines Teils einer erfindungsgemäßen Andockeinrichtung,
- Figur 11: eine schematische Draufsicht auf die Verriegelungseinheit gemäß Figur 10,
- Figur 12: die Verriegelungseinheit gemäß Figur 10 im Schließzustand,
- Figur 13: eine schematische Draufsicht auf die Verriegelungseinheit gemäß Figur 12,
- Figur 14: eine schematische Draufsicht auf einen Teilausschnitt der erfindungsgemäßen Andockeinrichtung,
- Figur 15: eine perspektivische Draufsicht auf einen Teilausschnitt der erfindungsgemäßen Andockeinrichtung,
- Figur 16: eine perspektivische Seitenansicht eines Teilausschnitts eines erfindungsgemäßen Kupplungsverschlusses,
- Figur 17: die Ansicht gemäß Figur 16 ohne Lagerschale,
- Figur 18: die perspektivische Draufsicht auf eine erfindungsgemäßen Lagerschale,
- Figur 19: die schematische perspektivische Ansicht der Stirnseite einer Antriebswelle einer alternativen Ausführungsform der erfindungsgemäßen Andockeinrichtung,
- Figur 20: die schematische perspektivische Ansicht der Stirnseiten der Partialwellenstummel gekoppelter Kupplungsverschlüsse der alternativen Ausführungsform der erfindungsgemäßen Andockeinrichtung,
- Figur 21a), b): die schematische Querschnittsansicht des Ineingriffbringens der Eingriffselemente gemäß den Figuren 19 und 20, und
- Figur 22a), b): die schematische Querschnittsansicht des Ineingriffbringens der Eingriffselemente einer alternativen Ausführungsform einer Arretiervorrichtung einer erfindungsgemäßen Andockeinrichtung.

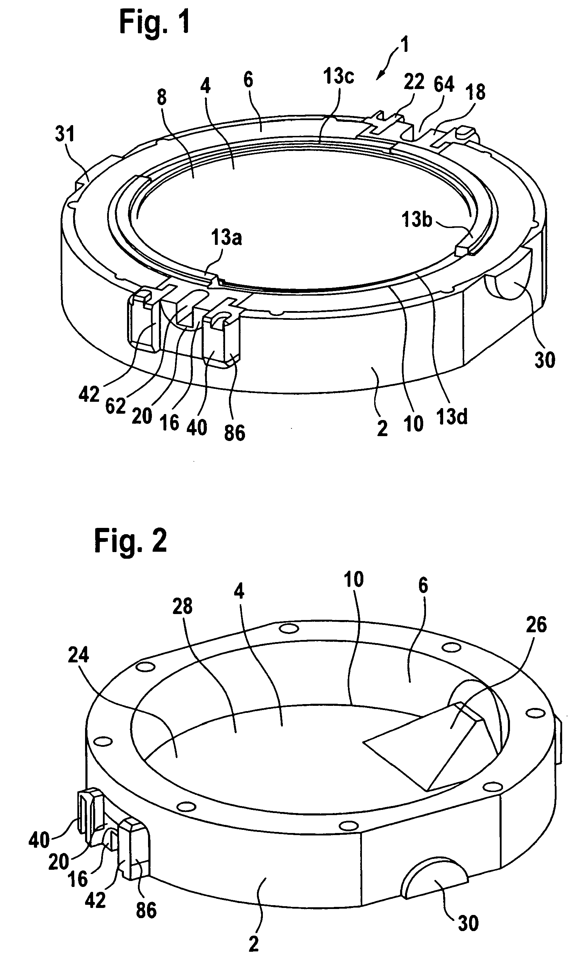

Figur 1 zeigt einen erfindungsgemäßen Kupplungsverschluß 1 von der Kupplungs- bzw. Verschlußseite in perspektivischer Draufsicht. Der Kupplungsverschluß verfügt über einen Rohrstutzen 2 mit im wesentlichen kreisförmiger Grundform, in den eine Schließklappe 4 eingelassen ist. Die abgebildete Kupplungsseite des Rohrstutzens sowie der innen liegende Bereich (nicht abgebildet) ist mit einer umlaufenden Rohrstutzendichtung 6 versehen. Auf der Kupplungsseite des Rohrstutzens 2 ist diese Dichtung 6 in der dargestellten Ausführungsform derart ausgeführt, daß sie in der Schließstellung im wesentlichen in einer Ebene mit der Außenseite 8 der Schließklappe, d.h. fluchtend vorliegt. Die Schließklappe 4 verfügt im Bereich des Umfangsrandes 10 über einen in die Außenseite 8 eingelassenen Dichtring 12 bzw. Dichtungsabschnitte. Der abgebildete Dichtring verfügt über insgesamt vier im wesentlichen gleich lange Kreissegmente (a) bis (d), wobei die sich jeweils einander gegenüberliegenden Segmente im wesentlichen übereinstimmen. Die Segmente (a) und (b) ragen über die Außenfläche 8 der Schließkappe 4 hinaus, während die Segmente (c) und (d) in die umlaufende Nut 12 der Außenseite 8 der Schließklappe 4 geringfügig eingelassen sind. Auf diese eingelassenen Segmente kann wahlweise auch vollständig verzichtet werden. Bei der vorangehend geschilderten Gestaltung der Dichtung 12 kann bereits mit einem weiteren, baugleichen Kupplungsverschluß eine dichte erfindungsgemäße Andockeinrichtung erhalten werden. Hierbei greifen dann die erhabenen Dichtungsbereiche (a) und (b) in entsprechende abgesenkte Dichtungsbereiche des korrespondierenden Kupplungsverschlusses und erhabene Dichtungsbereiche dieses korrespondierenden Kupplungsverschlusses greifen in die entsprechenden abgesenkten Bereiche c) und d) des Kupplungsverschlusses 1 ein, um so eine umlaufende Gesamtdichtung zu erzeugen. An die Schließklappe 4 schließen sich entlang einer Achse einander gegenüberliegende Partialwellenstummel 16 und 18 an. Bei diesen Partialwellenstummeln handelt es sich um Halbachsen, deren der Verschlußseite zugewandte Seite abgeflacht ist. Die in Halbachsenform vorliegenden Partialwellenstummel 16 und 18 verfügen jeweils über ein Eingriffelement 62 bzw. 64 in Form einer Nut, in die ein entsprechender Fortsatz bzw. Dorn einer Antriebswelle eingeführt werden kann. Ferner liegt die Lagerschale 20 bzw. 22 für die Partialwellenstummel in Form eines separaten Einsatzes 86 in dem Rohrstutzen 2 vor. Das Lagerschalenmaterial ist vorzugsweise aus einem abriebsfesten Kunststoff gefertigt, vorzugsweise PEK bzw. PEEK. Des weitere liegen auf der Seitenwandung des Rohrstutzens 2 in gegenüberliegender Position Vorsprünge 30 und 31 vor, die zur besseren Verriegelung einer aus zwei erfindungsgemäßen Kupplungsverschlüssen gebildeten Andockeinrichtung dienen und auf die nachfolgend noch detailliert eingegangen wird. Der abgeflachte Bereich der Partialwellenstummel 16 und 18 liegt im verschlossenen Zustand im wesentlichen in einer Ebene, d.h. fluchtend mit der Außenseite 8 der Schließklappe 4 vor. Die Partialwellenstummel 16 und 18 sind in Lagerschalen 20 und 22, die in dem Rohrstutzen 2 eingelassen sind, schwenkbar gelagert. Der Verschlußseite 27 des Kupplungsverschlusses 1 liegt deren Geräte- bzw. Behälterseite 28 gegenüber. Der Rohrstutzen 2 ist beim Umfüllvorgang demgemäß an seiner Geräte- bzw. Behälterseite mit einem entsprechenden Behältnis bzw. Fördermittel, beispielsweise einem Schlauch oder Rohr, umweltdicht verbunden. Details der Geräte- bzw. Behälterseite des Kupplungsverschlusses 1 sind der Figur 2 zu entnehmen. Die Rohrstutzendichtung 6 deckt hierbei vollumfänglich die Innenseite sowie den der Geräteseite zugewandten Rand des Rohrstutzens 2 ab und erstreckt sich bis zur äußeren Seitenwand des Rohrstutzens. Die kreisförmige Schließklappe 4 liegt mit ihrem Umfangsrand 10 in der Schließstellung bündig in der Dichtung 6 vor. Die Wellenstummel 16, 18 (nicht abgebildet) werden von keilförmigen Aufsätzen 24 und 26, die auf der Geräteseite 28 der Schließklappe 4 einstückig mit dieser vorliegen, aufgenommen. Ferner ist in der Figur 2 eine der zwei in den verschlußseitigen Rand des Rohrstutzens eingelassenen Lagerschalen 20 zu erkennen. In diesen Lagern sind die in Form einer Halbachse vorliegenden Wellenstummel 16, 18 schwenkbar gelagert. Darüber hinaus verfügt der Rohrstutzen 2 auf seiner Außenwandung, vorzugsweise um 90° versetzt zu der durch die sich gegenüberliegenden Wellenstummel 16, 18 gebildeten Schwenkachse, über einen Fortsätze 30 und 31 (nicht abgebildet) in Form eines Halbkreises zur Kraftbeaufschlagung. Darüber hinaus liegen im Bereich der Lagerschalen auf der Außenwandung des Rohrstutzens 2 Anschläge 40 und 42 vor. Diese können einstückig mit dem Einsatz 86 für die Lagerschale ausgebildet sein und haben zweierlei Funktion. Zum einen dient deren Stirnfläche als Anschlag für eine Justierhilfe bzw. ein Gehäuse, z.B. das der Antriebswelle, und zum anderen kann in Wechselwirkung mit einer korrespondierenden Führeinrichtung 36, 38 der Kupplungsverschluß 1 positionsgenau vor die jeweiligen Antriebswellen gebracht werden.

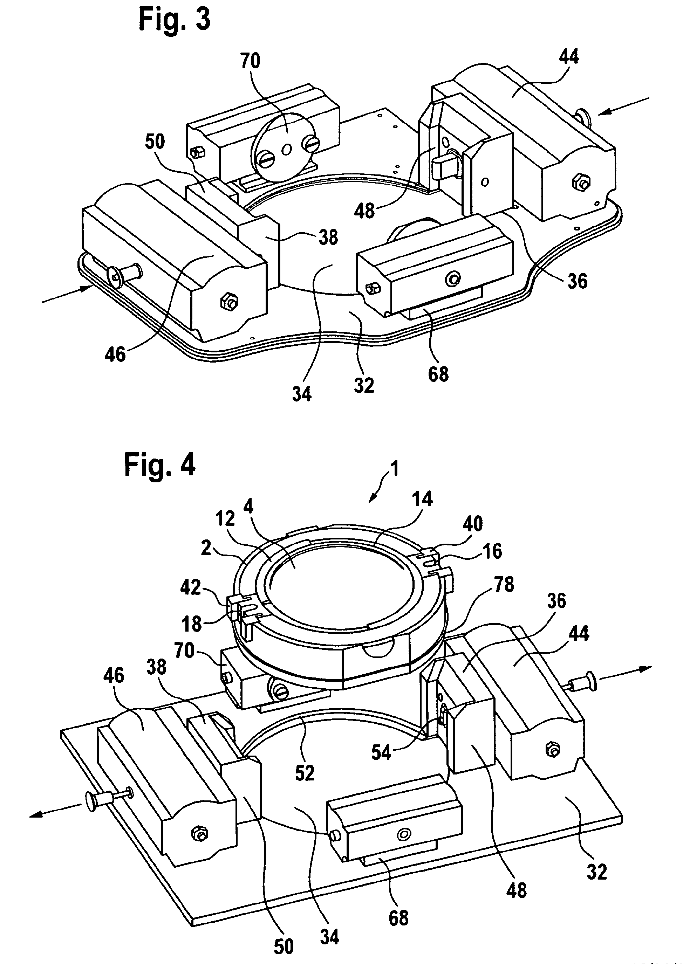

In Figur 3 ist eine Andockplattform 32 gezeigt, die dazu ausgelegt ist, die erfindungsgemäße Andockeinrichtung zwecks Schüttguttransfers von einer Schließstellung in eine geöffnete Stellung zu überführen. Diese Plattform 32 verfügt über eine Durchtrittsöffnung 34, deren Ausmaße im wesentlichen dem Außenumfang des Rohrstutzens 2 der erfindungsgemäßen Kupplungsverschlüsse entsprechen. Zur besseren Handhabung und insbesondere zum leichteren Andocken der erfindungsgemäßen Vorrichtungen liegen auf der Arbeitsplattform 32 an sich gegenüberliegenden Positionen Führeinrichtung 36 und 38 vor. In diese Führeinrichtung 36 und 38 lassen sich entsprechende Anschläge 40 und 42 (nicht abgebildet), die an den Außenseiten der Rohrstutzen 2 vorliegen, einführen, so daß die Wellenstummel 16, 18 ohne weiteres korrekt positionierbar sind. Auf der Arbeitsplatte 32 liegen ferner an sich gegenüberliegenden Positionen Antriebe 44 und 46 sowie Wellenlager 48 und 50 vor. Des weiteren sind auf der Arbeitsplattform 32 an den sich gegenüberliegenden Positionen Verrieglungseinheiten 68 und 70 angebracht. Diese Einheiten haben den Zweck, aneinander zur Anlage gebrachte, eine erfindungsgemäße Andockeinrichtung bildende Kupplungsverschlüsse während des Schüttguttransfervorgangs gegeneinander zu verriegeln. Deren genaue Funktionsweise wird nachfolgend noch detaillierter beschrieben.

Wie in Figur 4 abgebildet, kann ein erster Kupplungsverschluß 1 über die Führeinrichtungen 36 und 38 in die Öffnung 34 der Arbeitsplattform 32 eingesetzt werden. Die Durchtrittsöffnung 34 kann dabei derart dimensioniert und konstruiert sein, daß sie über einen Auflagerand 52 verfügt, auf dem der erste Kupplungsverschluß 1 behälterseitig aufsetzen kann. Die Wellenstummel 16 und 18 liegen dann automatisch in der richtigen Höhe vor den Antriebswellen 54 und 56 (nicht abgebildet) vor. Darüber hinaus ist die Andockplattform 32 mit zwei gegenüberliegend angebrachten Verriegelungseinheiten 68 und 70 ausgestattet, auf deren Funktionsweise im folgenden noch im Detail eingegangen werden wird.

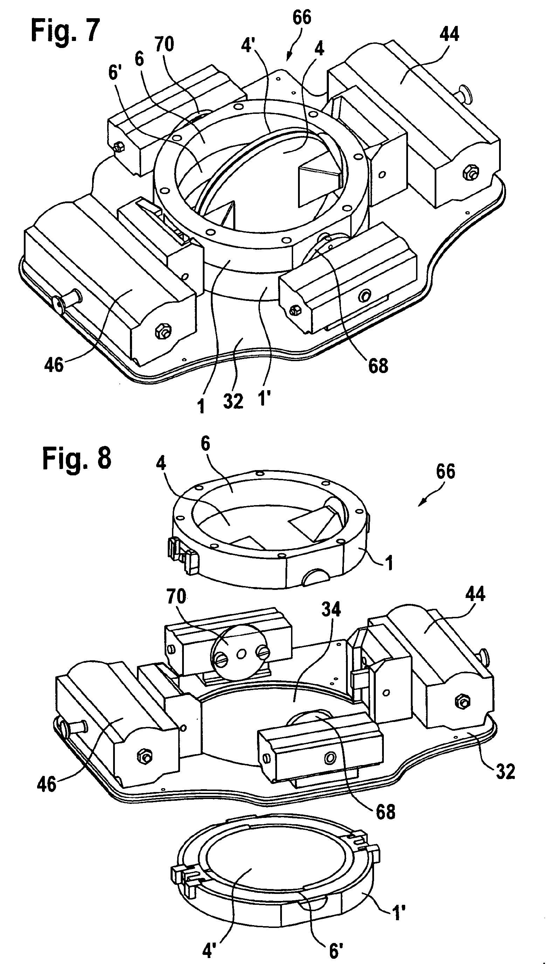

Um ein und denselben Kupplungsverschluß sowohl von oben, wie in Fig. 4 dargestellt, als auch von unten, wie in Fig. 8 angedeutet, in die Durchgangsöffnung 34 einführen zu können, ist für den Fall der Einführung von oben gemäß Fig. 4 an den Rohrstutzen 2 behälterseitig ein umlaufender Auflageüberstand 78 angebracht, der über die Außenabmessungen des Rohrstutzens 2 hinausragt. Dieser Auflageüberstand 78 ist folglich derart dimensioniert, daß er auf dem Auflagerand 52 der Durchgangsöffnung 34 zur Auflage kommt. Die Dicke dieses Auflageüberstands 78 ist zudem so bemessen, daß die Wellenstummel 16 und 18 auf der Höhe der Antriebswellen 54 und 56 positioniert sind. Wenn, wie im vorliegenden Fall, die Eingriffselemente 62 und 64 in Form einer Nut vorliegen, die nicht komplett durchgehend ist, haben die Antriebswellen mit den komplementären Eingriffselementen der Antriebswellen, wie in Fig. 4 dargestellt, eingefahren vorzuliegen. Hingegen sind in der Fig. 3 die komplementären Eingriffselemente 58 und 60 im ausgefahrenen Zustand, in dem sie in die Eingriffselemente der Wellenstummel eingreifen, gezeigt.

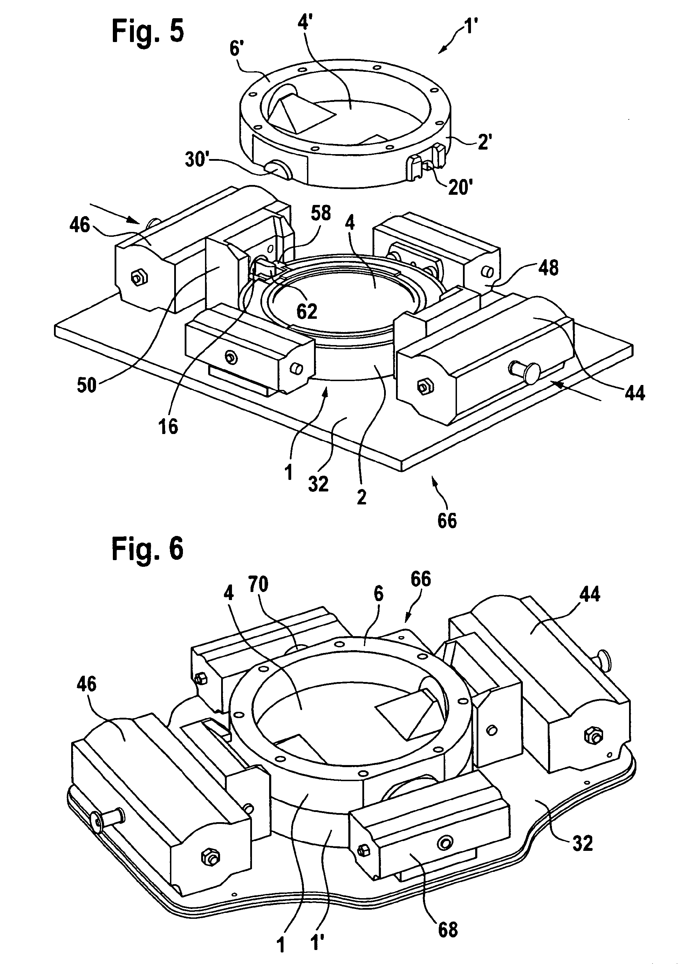

Figur 5 zeigt den in die Andockplattform 32 eingesetzten ersten Kupplungsverschluß 1, wobei die komplementären Eingriffselemente 58 und 60 (nicht abgebildet) der Antriebswelle, die in Form eines Doms vorliegen, bereits in das in Form einer nach oben offenen Nut vorliegende Eingriffselement 62 des Partialwellenstummels 16 axial eingeschoben worden ist. Die komplementären Eingriffselemente 58 und 60 können in diesem Zustand für den anzukuppelnden zweiten Kupplungsverschluß 1' auch als Zentriervorrichtungen dienen.

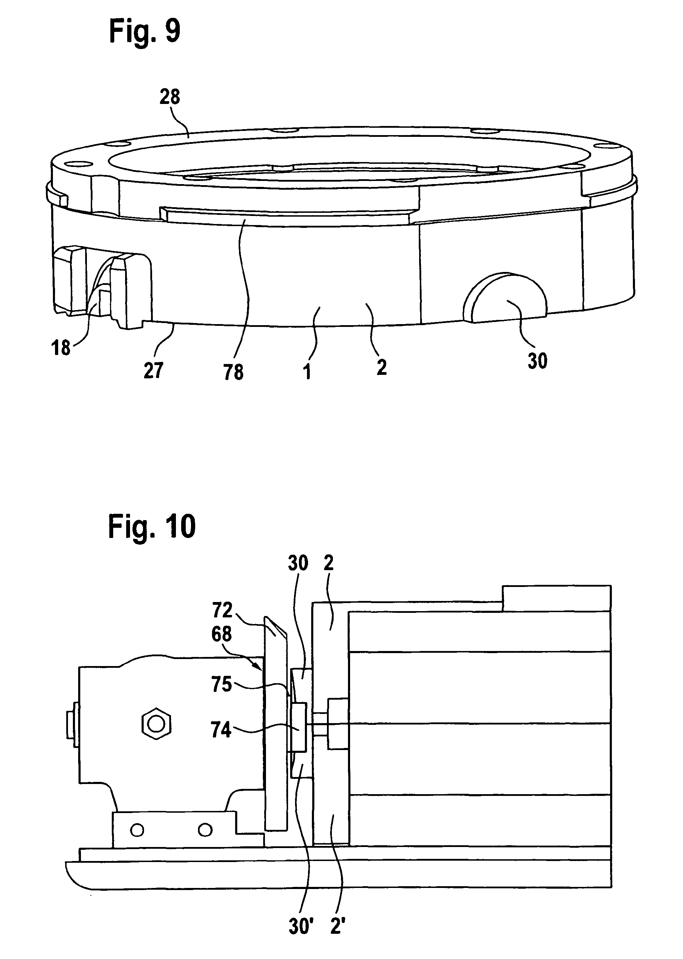

In Figur 6 ist die auf der Andockplattform 32 vorliegende gekuppelte Andockeinrichtung 66 abgebildet. Beide Kupplungsverschlüsse 1 und 1' liegen über ihre Verschlußseiten bündig aneinander an. Die Eingriffselemente der aneinander liegenden Partialwellenstummel bilden ein einheitliches Eingriffselement 80 (nicht abgebildet) in Form einer nach oben und unten begrenzten Nut, in die das in Form eines abgeflachten Doms vorliegende komplementäre Eingriffselemente 58 der Antriebswelle eingreift. Dieses trifft auf beide sich gegenüberliegenden Gesamtwellenstummel 82 und 84 (nicht abgebildet) zu. Demgemäß können die aneinander anliegenden Schließklappen 4 und 4' (nicht abgebildet) durch gleichzeitige Betätigung der zwei Antriebe 44 und 46 um ihre gemeinsame Achse in eine Öffnungsstellung, wie in Figur 7 gezeigt, geschwenkt werden. Die komplementären Eingriffselemente 58 und 60 lassen sich, wie durch die Pfeile in den Figuren 3 bis 6 angedeutet, auch manuell in die Eingriffsposition sowie auch wieder aus dieser Eingriffsposition in eine freigegebene Position bringen. Die Verriegelungseinheiten 68 und 70, liegen auf der Andockplattform auf einer Achse vor, die senkrecht zur Drehachse ist. Mit diesen Vorrichtungen werden die Kupplungsverschlüsse 1 und 1' im gekoppelten Zustand gegeneinander arretiert bzw. gegeneinander gepreßt. Dieser Vorgang ist beispielhaft den Figuren 10 bis 13 zu entnehmen.

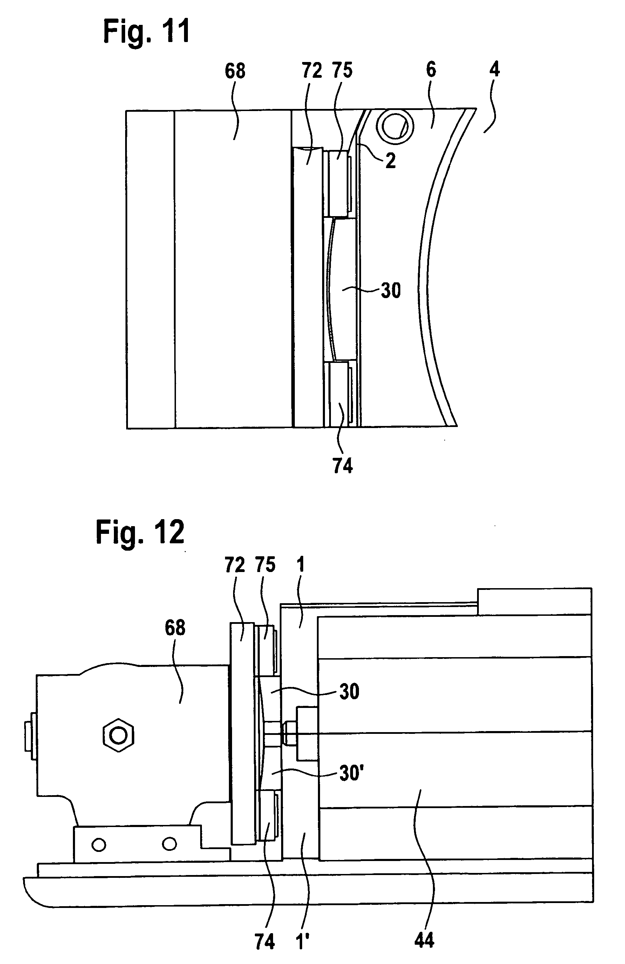

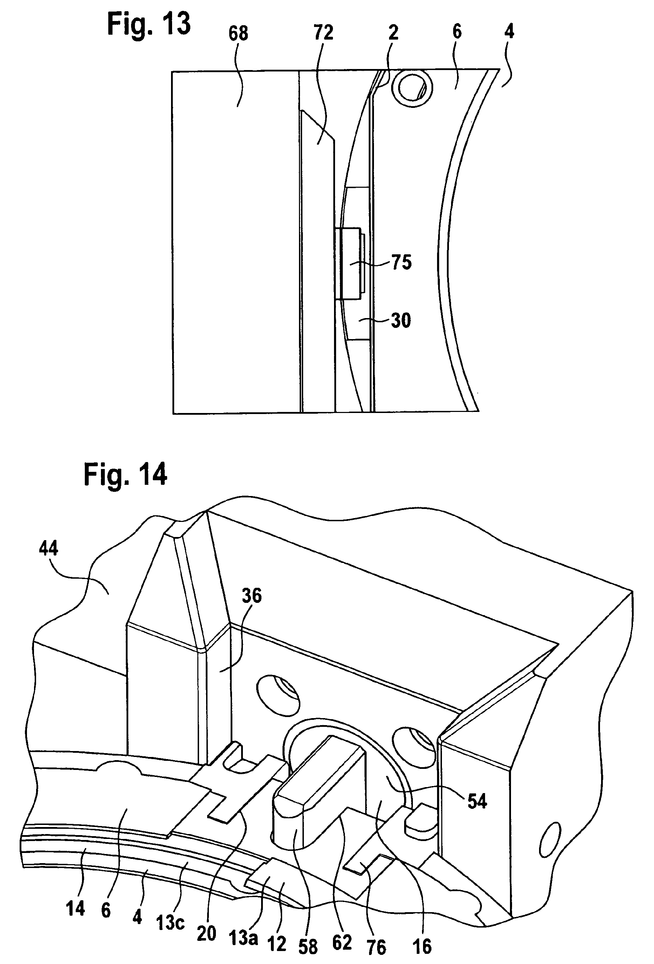

Wie in Fig. 10 gezeigt, liegen auf den Außenseiten der Rohrstutzen 2 und 2' Vorsprünge 30 bzw. 30' vor. Diese Vorsprünge können aus behälterseitiger Richtung mit Kraft beaufschlagt werden. Hierfür eignet sich beispielsweise die in Figur 10 wiedergegebene, drehbar gelagerte Vorrichtung 72 in Form einer Scheibe, die Bestandteil der Verriegelungseinheit 68 ist. Wie aus Fig. 11 zu ersehen, ist der Abstand der an gegenüberliegenden Seiten der Scheibe 72 vorliegenden Rollen 74 und 75 so bemessen, daß bei Drehung der Scheibe um 90° auf die Vorsprünge 30 und 30' eine Kraft wirkt, so daß die Rohrstutzen 2 und 2' bzw. deren Dichtungen gegeneinander gepreßt werden (s.a. Fig. 12). Die Vorsprünge 30 und 30' sind gewölbt. Deren Außenumfänge liegen im verriegeltem Zustand im wesentlichen zumindest abschnittsweise auf einem gemeinsamen Kreisumfang. Im nicht-verriegelten Zustand bilden die Vorsprünge 30 und 30' aufgrund der Dichtungen 12 und 12' von aneinander anliegenden Kupplungsverschlüssen 1 und 1' ein exzentrisches System. Indem man den Abstand der Rollen 74 und 75 derart einstellt, daß dieser im wesentlichen dem Durchmesser des genannten Kreisumfangs entspricht, gelingt über die durch die Dichtungen voneinander entfernten Vorsprünge 30 und 30' eine Kraftbeaufschlagung aus gegenläufigen Richtungen bei Rotation der Scheibe 72 um die zentrale Drehachse aus einer Öffnungsposition, in der die Rollen 74 und 75 auf einer Linie vorliegen, die im wesentlichen parallel zur Außenseite der aneinander liegenden Schließklappen ist, in eine Verriegelungsposition, in der diese Linie um 90° gedreht ist. Zweckmäßigerweise verfügen die Vorsprünge 30 und 30' sowie 31 und 31' (nicht abgebildet) über Aussparungen an ihren gegenüberliegenden Seitenrändern, sodaß die Kupplungsverschlüsse ohne weiteres in die Verriegelungseinheit 68 eingeführt werden können. Der Verriegelungszustand der Verriegelungseinheit 68 wird besonders anschaulich, wenn man die Abbildungen der Figuren 12 und 13 nebeneinander legt. Während Figur 12 die Seitenansicht liefert, zeigt Figur 13 eine schematische Draufsicht. Durch die Feinabstimmung der Abstände der Rollen 74 und 75 auf das Ausmaß des Hervorstehens der Dichtung 12 über die Außenseiten der Schließklappen kann im Verriegelungszustand eine besonders dichte Andockeinrichtung erhalten werden. Es kann auf diese Weise sichergestellt werden, daß kein Schüttgutmaterial die Umwelt kontaminiert bzw. Schüttgut durch Umwelteinflüsse beim Transfervorgang kontaminiert wird. In diesem Zustand kann sodann über die Antriebe 44 und 46 die Andockeinrichtung geöffnet werden, wie in Figur 7 dargestellt.

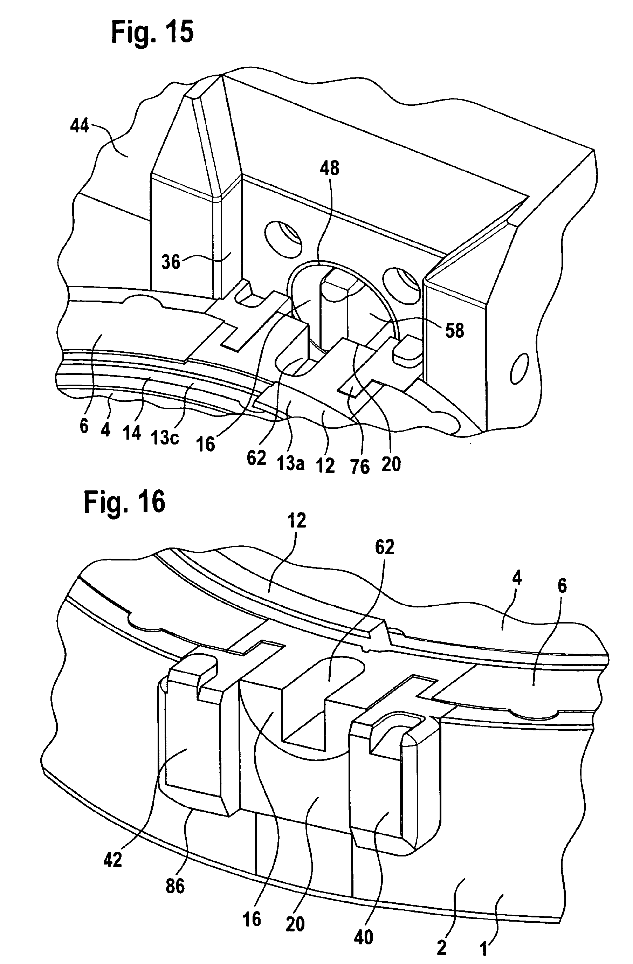

Um die Kupplungsverschlüsse voneinander zu trennen, sind zunächst die Verriegelungseinheiten 68 und 70 wieder freizugeben. Anschließend kann der oben aufliegende Kupplungsverschluß entfernt werden. Bewegt man dann die Antriebswellen 54, 56 entlang der Drehachse weg von den Wellenstummeln 16, 18, wird auch der zweite Kupplungsverschluß zur Entnahme aus der Andockplattform freigegeben (s.a. Fig. 14 und 15). Denn die korrespondierenden Eingriffselemente befinden sich nicht mehr in Kontakt miteinander, so daß auch der in die Durchgangsöffnung 34 eingesetzte Kupplungsverschluß von der Arbeitsplattform 32 zu entfernen ist. Die Figuren 14 und 15 zeigen ferner ein Führungs- und Halteelement 76. Hierin ist der Wellenstummel gelagert. Durch das Ineinandergreifen von Nut- und Federelementen wird der Wellenstummel stets einwandfrei und zuverlässig bei der Rotation geführt. Außerdem sorgt die Vorrichtung 76 dafür, daß der Wellenstummel 16 sicher in der Lagerschale 20 gehalten wird. Durch geeignete Wahl der Materialien kann sogar vollständig auf Schmiermittel verzichtet werden.

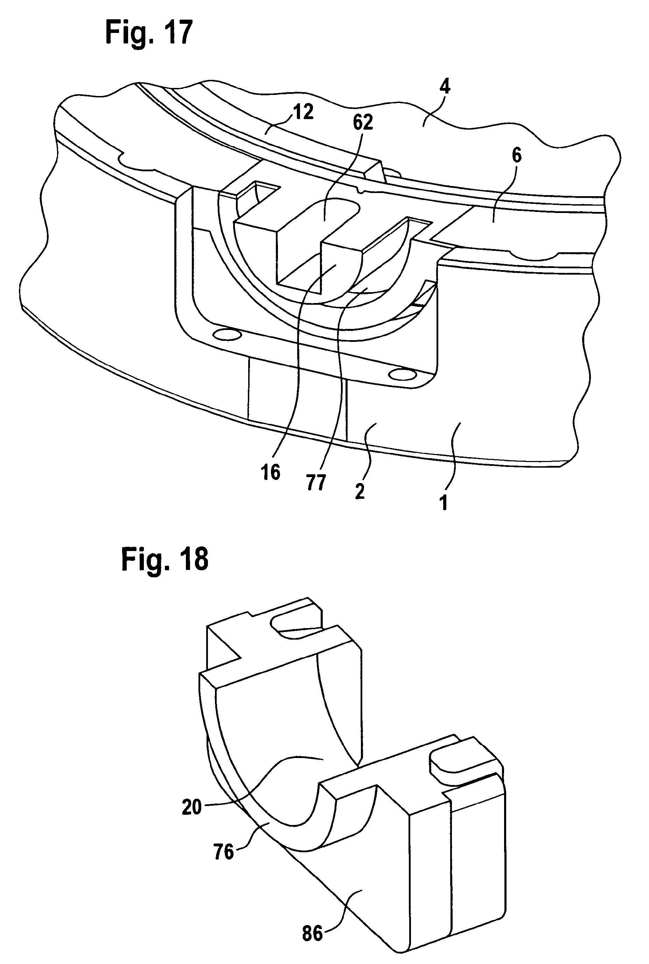

Aus Figur 16 geht nochmals ausdrücklich der separate Einsatz 86 für das Lager bzw. die Lagerschale 20 hervor. Dieser Einsatz wird in eine entsprechende Auslassung des Rohrstutzens 2, wie in Figur 17 gezeigt, eingelassen. Der Partialwellenstummel 16 liegt mit seiner abgerundeten Seite somit vollständig und ausschließlich auf der Lagerschale 20 dieses Einsatzes 86 auf. Die Lagerschale 20 ist hierbei zusätzlich als Führungselement 76 gearbeitet bzw. umfaßt ein solches Führungselement. Dieses Führungselement 76, das in der dargestellten Ausführungsform (s.a. Figur 18) eine Verlängerung der Lagerschale 20 darstellt, greift ein eine entsprechende Einbuchtung 77 in Form einer Feder/Nut-Wechselwirkung ein (s.a. Figur 17). Auf diese Weise gelingt eine äußerst zuverlässige und sichere Lagerung von Wellenstummel bzw. der hiermit verbundenen Schließklappe 4. Das Führungselement 76 sorgt somit als Bestandteil des Einsatzes 86 für einen sicheren Halt der Partialwelle und verhindert ein Verrutschen in axialer Richtung ebenso wie ein Herausfallen der Schließklappe aus dem Rohrstutzen.

Durch die Verwendung einer Arbeitsplattform, auf der die Antriebe bereits fest fixiert vorliegen, gelingt dauerhaft ein fehlerfreies Andocken zweier Kupplungsverschlüsse. Von besonderem Vorteil ist ferner, daß die erfindungsgemäße Andockeinrichtung mit baugleichen Kupplungsverschlüssen erhalten wird. Zudem liegt die erfindungsgemäße Andockeinrichtung auf der Arbeitsplattform bewegungsinvariant vor.

Von besonderem Vorteil bei der erfindungsgemäßen Andockeinrichtung ist schließlich die Ausbildung eines einheitlichen Eingriffelements 80, das aus den in den Partialwellenstummeln vorliegenden Eingriffselementen 62, 64 gebildet wird. Denn auf diese Weise können über das Einführen eines mit diesem einheitlichen Eingriffselement 80 korrespondierenden Eingriffselements der Antriebswelle beim Verschwenken der über ihre Außenseiten aneinander anliegenden Schließklappen beide Schließklappen gleichzeitig und gleichmäßig mit einem Drehmoment beaufschlagt werden. Anders als bei herkömmlichen Andockeinrichtungen bestehend aus Aktiv- und Passivklappe kann somit eine Spaltbildung aufgrund einseitiger Drehmomentbeaufschlagung vermieden werden. Demgemäß wird bei den erfindungsgemäßen Andockeinrichtungen beim Rotationsvorgang auf die Außenseiten der aneinander anliegenden Schließklappen sehr gleichmäßig Kraft ausgeübt. Ein weiterer Vorteil der gleichzeitigen Drehmomentbeaufschlagung beider Schließklappen beim Drehvorgang ist darin zu erblicken, daß die Antriebe, insbesondere wenn die Wellen an beiden Achsseiten angetrieben werden, kleiner ausgeführt werden können als bei konventionellen Andockeinrichtungen. Dieses ermöglicht ein geringeres Bauvolumen und damit eine bessere Einpassung in bestehende Umfüllanlagen beim Nutzer. Außerdem läßt sich auf diese Weise besonders gut die Arbeits- bzw. Andockplattform symmetrisch auslegen, was sich insbesondere bei elastischer Lagerung der Arbeitsplattform positiv bemerkbar macht.

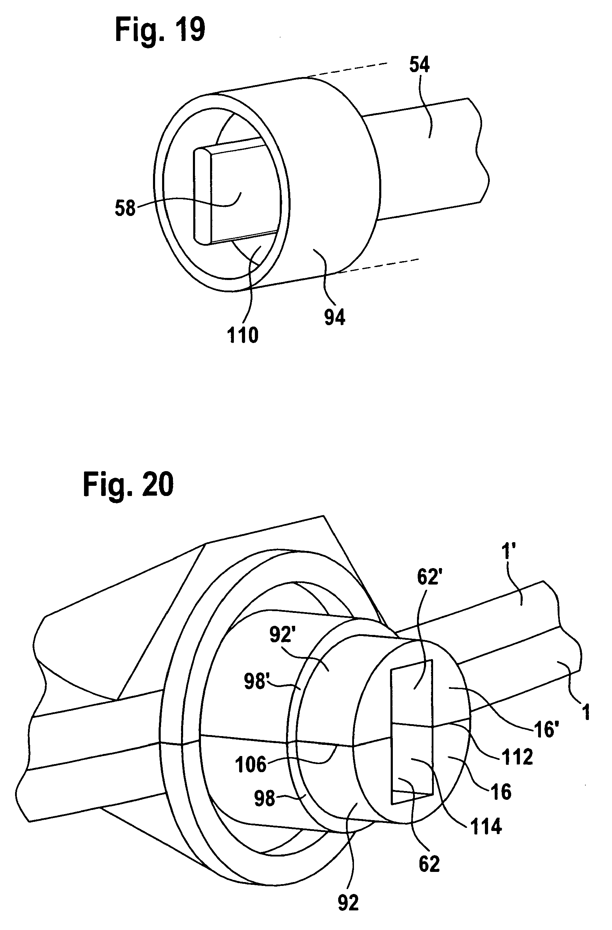

Figur 19 zeigt die Stirnflächenansicht einer Antriebswelle 54 mit einem an der Stirnseite 110 in Form eines im wesentlichen als quaderförmiger Fortsatz vorliegenden komplementären Eingriffselements 58. Im Unterschied zu den vorherigen Ausführungsformen verfügt die Antriebswelle 54 im stirnseitigen Bereich zusätzlich als zweites Arretierelement über einen zylinderförmigen Aufsatz 94, der das komplementäre Eingriffselement 58 umgibt. Selbstverständlich kann die Antriebswelle 54 auch bereits selber über einen Durchmesser verfügen, der dem Durchmesser des zylinderförmigen Aufsatzes 94 entspricht, so daß beispielsweise Antriebswelle und zylinderförmiger Aufsatz als Einheit vorliegen (durch gestrichelte Linie angedeutet). Dem Fachmann sind geeignete Verfahren bekannt, um jegliche Ausgestaltung einer solchen Antriebswelle, enthaltend einen zylinderförmigen Aufsatz 94, in dem ein komplementäres Eingriffselement vorliegt, herzustellen. Wie bereits vorangehend erläutert, dient das komplementäre Eingriffselement 58 dazu, in die Eingriffselemente 62, 64 von erstem und zweitem Kupplungsverschluß eingeschoben werden zu können, damit die Drehbewegung der Antriebswelle 54 auf die aneinander anliegenden Schließklappen der ersten und zweiten Kupplungsverschlüsse übertragen werden kann.

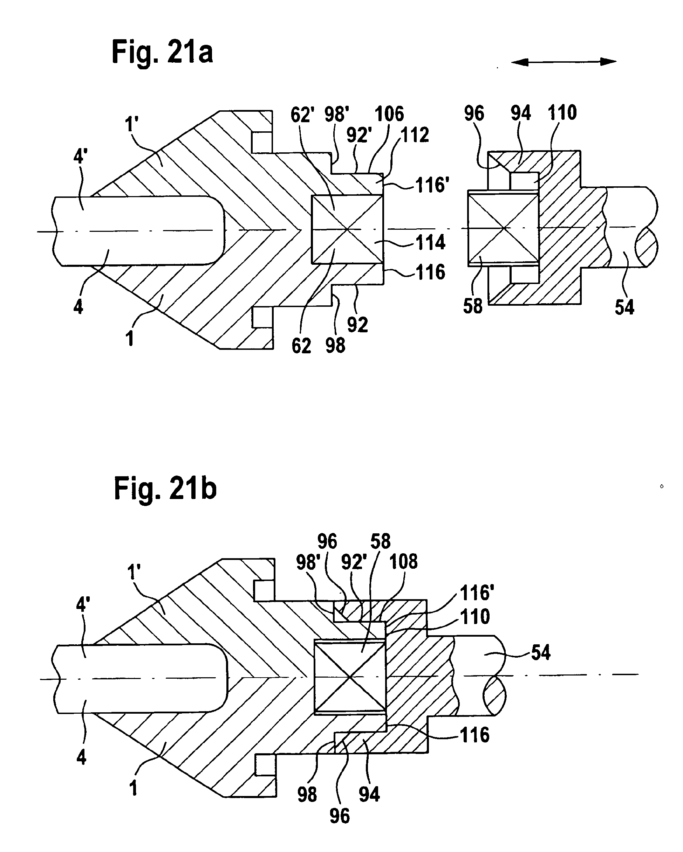

Dementsprechend zeigt Figur 20 ausschnittsweise aneinander zur Anlage gebrachte erste und zweite Kupplungsverschlüsse 1 und 1' mit ebenfalls zur Anlage gebrachten korrespondierenden Partialwellenstummeln 16 und 16', die gemeinsam einen (Gesamt)-Wellenstummel 112 ausbilden. Die in Form von Nuten in diesen Partialwellenstummeln vorliegenden Eingriffselemente 62 und 62' bilden bei Anlage von erstem und zweitem Kupplungsverschluß eine durchgehende Nut in Form eines Gesamteingriffselements 114 aus, in die das dazu komplementäre Eingriffselement 58 der Antriebswelle 54 bei axialer Bewegung eingreifen kann. Die Partialwellenstummel 16 und 16' verfügen auf ihrer radialen Außenseite jeweils über eine Kontakt- bzw. Anschlagsfläche 92 bzw. 92'. In der dargestellten Ausführungsform bilden diese radialen Kontaktflächen 92 und 92', die Partialarretierelemente darstellen, ein erstes Arretierelement 106 in Form einer zylinderförmigen, umhüllenden Fläche aus. Diese Kontaktflächen sind derart geformt und dimensioniert, daß bei axialer Relativbewegung von Antriebswelle 54 und Wellenstummel 112 nicht nur das komplementäre, in Form eines Doms vorliegende Eingriffselement 58 in die Nut 14 eingreift, sondern ebenfalls der zylinderförmige Aufsatz 94 der Antriebswelle sich als zweites Arretierelement über die radialen Kontaktflächen 92, 92' unter Ausbildung einer Arretiereinheit 108 (s.a. Fig. 21a) und b)) schiebt. Hierbei hat es sich als vorteilhaft erwiesen, daß der Innendurchmesser des zylinderförmigen Aufsatzes 94 und der Außendurchmesser der Kontaktflächen 92, 92' bzw. des ersten Arretierelements 106 eng aufeinander abgestimmt sind, so daß zwar eine axial Relativbewegung ohne weiteres möglich ist, jedoch eine Bewegung in radialer Richtung nicht zugelassen bzw. verhindert wird. Auf diese Weise werden die ersten und zweiten Kupplungsverschlüsse gegeneinander arretiert und können zwangsläufig bei Drehmomentbeaufschlagung über die Antriebswelle nicht mehr voneinander getrennt werden. Diese Ausgestaltung der erfindungsgemäßen Andockeinrichtung 66 macht zusätzliche, externe Verriegelungs- bzw. Arretiervorrichtungen überflüssig und gewährleistet gleichwohl ein sehr hohes Maß an Betriebssicherheit.

Die Figuren 21a) und 21b) veranschaulichen in schematischer Querschnittsansicht das axiale Eingreifen des komplementären Eingriffselements 58 der Antriebswelle gemäß Fig. 19 in das durch die Nuten 62 und 62' gebildete Gesamteingriffselement 114 des Gesamtwellenstummels 112 der angedockten Kupplungsverschlüsse 1,1' gemäß Fig. 20. Der zylinderförmige Aufsatz bzw. die zylinderförmige Hülse 94 ist hierbei auf die äußeren radialen Kontakt- bzw. Anschlagsflächen 92, 92' derart abgestimmt, daß ein passgenaues Eingreifen bei axialer Bewegung gelingt. Die Hülse 94 läßt sich auf den Wellenstummel 112 aufschieben. Liegt die Antriebswelle 54 in Eingriff mit dem Gesamt-Wellenstummel 112 vor, können die Kupplungsverschlüsse 1 und 1' nicht mehr voneinander getrennt werden. Um das Einführen des GesamtWellenstummels 112 unproblematisch zu gestalten, ist der Rand 96 der zylinderförmigen Hülse innenseitig umlaufend angeschrägt ausgestaltet. Zweckmäßigerweise verfügen die Partialwellenstummel 16 und 16'jeweils über Anschläge 98, 98', die die Axialbewegung der Antriebswelle beim Eingriffsvorgang stoppen. Auf diese Weise kann verhindert werden, daß die Stirnflächen 116, 116' der Partialwellenstummel unmittelbar an der Stirnflächen 110 der Antriebswelle 54 anliegt, und ebenfalls, daß die Stirnfläche des komplementären Eingriffselements 58 an der Stirnfläche des Eingriffselements 62, 62' anschlägt.

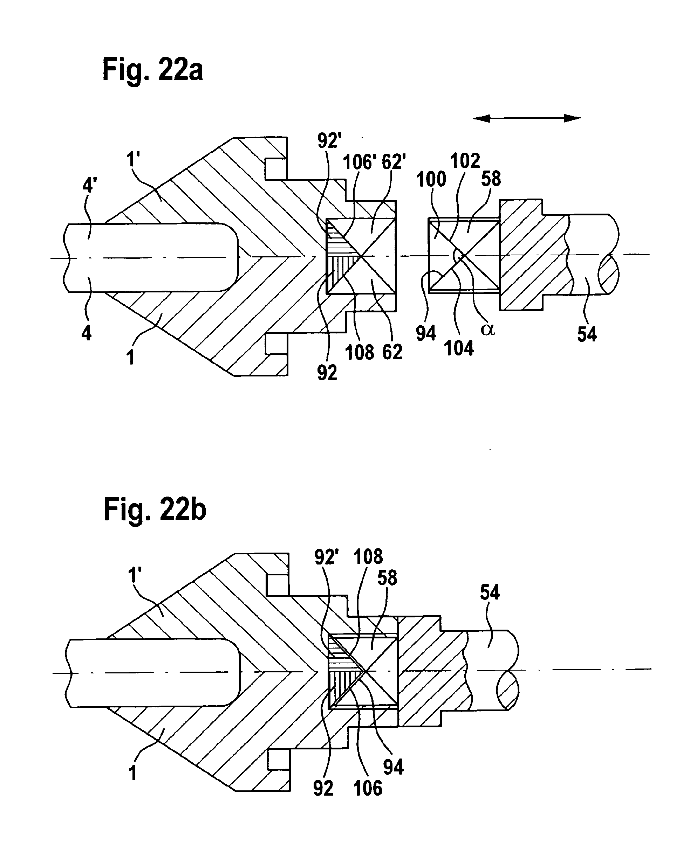

Die Figuren 22a) und 22b) zeigen in schematischer Querschnittsansicht eine alternative Möglichkeit zur gegenseitigen Arretierung von erstem und zweitem Kupplungsverschluß 1, 1' durch Wechselwirkung des komplementären Eingriffselements 58 der Antriebswelle 54 mit den Partialarretierelementen 92 und 92' der Eingriffselemente 62 und 62' von erstem und zweitem Kupplungsverschluß. Bei dieser Ausgestaltung ist die Stirnfläche des komplementären Eingriffselements 58 mit einer Einbuchtung 100 versehen, welche durch eine erste Kontaktfläche 102 und eine zweite Kontaktfläche 104 begrenzt ist. Diese Kontaktflächen bilden das zweite Arretierelement 94 aus. Die ersten und zweiten Kontaktflächen 102, 104 sind einander zugewandt und stehen in einem Winkel α zueinander. Die Eingriffselemente 62 und 62' vom ersten und zweiten Kupplungsverschluß 1 bzw. 1' sind jeweils ebenfalls mit einem Partialarretierelement 92 bzw. 92' ausgestattet und bilden gemeinsam das erste Arretierelement 106 in Form eines Keils aus. Das Partialarretierelement 92 verfügt über eine geneigte Kontaktfläche 108, die bei axialer Bewegung der Antriebswelle 54 in Berührung mit der Kontaktfläche 104 des komplementären Eingriffselements 58 treten kann, während in gleicher Weise das Partialarretierelement 92' über eine spiegelbildlich geneigte Kontaktfläche 106' verfügt, welche bei dieser Axialbewegung in Berührung mit der ersten Kontaktfläche 102 des komplementären Eingriffselements 58 treten kann. Durch die bei der Axialbewegung über die Kontaktflächen 102 und 104 auf die Arretierelemente 92 und 92' bzw. deren Kontaktflächen ausgeübten Kräfte werden der erste und zweite Kupplungsverschluß unter Ausbildung einer Arretiereinheit 108 gegeneinander gedrückt bzw. gegeneinander arretiert (s.a. Fig. 22 b)). Hierbei ist es von besonderem Vorteil, wenn die Partialarretierelemente 92 und 92' bzw. das erste Arretierelement 106 und die Einbuchtung 100 bzw. die erste und zweite Kontaktfläche 102 und 104 bzw. das zweite Arretierelement 94 derart dimensioniert und aufeinander abgestimmt sind, daß weder der umlaufende Rand der Einbuchtung 100, noch der am weitesten in die Einbuchtung 100 hineinragende Bereich der Arretierelemente 92 und 92' die Axialbewegung beim Ineinandergreifen begrenzen, sondern daß dieses allein über die Berührung der ersten und zweiten Kontaktflächen 102 und 104 mit den entsprechenden Kontaktflächen der Partialarretierelemente 92 und 92' geschieht. Auf die vorangehend anhand der Figuren 22a) und b) geschilderte Weise ist es ebenfalls möglich, die ersten und zweiten Kupplungsverschlüsse gegeneinander zu pressen bzw. zu arretieren und beim Drehvorgang der Schließklappen auch arretiert bzw. gegeneinander gepreßt zu halten, ohne daß es externer, zusätzlicher Verriegelungselemente bedarf. Selbstverständlich ist es ebenfalls möglich, die in den Figuren 21 und 22 dargestellten und vorangehend geschilderten Ausführungsformen einander komplementärer Arretierelemente zu kombinieren. Auf diese Weise würden über die gleichzeitige Ausbildung zweier Arretiereinheiten die Kupplungsverschlüsse der Andockeinrichtung gegeneinander arretiert bzw. gepresst werden.

Der besseren Übersicht halber sind bei sämtlichen dargestellten Kupplungsverschlüssen und Andocksystemen die sich behälterseitig an den Kupplungsverschluß bzw. den Rohrstutzen des Kupplungsverschlusses anschließenden Behälter nicht mit abgebildet worden.

Die in der vorstehenden Beschreibung, in den Ansprüchen sowie in den Zeichnungen offenbarten Merkmale der Erfindung können sowohl einzeln als auch in jeder beliebigen Kombination für die Verwirklichung der Erfindung in ihren verschiedenen Ausführungsformen wesentlich sein.

### Bezugszeichenliste

- 1: Kupplungsverschluß
- 2: Rohrstutzen
- 4: Schließklappe
- 6: Rohrstutzendichtung
- 8: Außenseite der Schließklappe
- 10: Umfangsrand der Schließklappe
- 12: Dichtung der Schließklappe,
- 13 a) und b): Dichtungsabschnitte
- 14: Nut
- 16: Wellenstummel
- 18: Wellenstummel
- 20: Lagerschale
- 22: Lagerschale
- 24: Keilförmiger Aufsatz
- 26: Keilförmiger Aufsatz
- 27: Verschlußseite
- 28: Geräteseite
- 30: Vorsprung auf der Außenseite des Rohrstutzens
- 31: Vorsprung auf der Außenseite des Rohrstutzens
- 32: Andockplattform
- 34: Durchtrittsöffnung
- 36: Einführvorrichtung
- 38: Einführvorrichtung
- 40: Anschlag
- 42: Anschlag
- 44: Antrieb
- 46: Antrieb
- 48: Wellenlager
- 50: Wellenlager
- 52: Auflagerrand
- 54: Antriebswelle
- 56: Antriebswelle
- 58: komplementäres Eingriffselement
- 60: komplementäres Eingriffselement
- 62: Eingriffselement
- 64: Eingriffselement
- 66: Andockeinrichtung
- 68: Verriegelungseinheit
- 70: Verriegelungseinheit
- 72: drehbar gelagerte Vorrichtung
- 74: Rolle
- 75: Rolle
- 76: Führungs- und Halteelement
- 77: Einbuchtung zur Aufnahme des Führungselements
- 78: Auflageüberstand
- 80: einheitliches Eingriffselement
- 82: (Gesamt)Welle aus Partialwellen 16, 16'
- 84: (Gesamt)Welle zur Partialwellen 18, 18'
- 86: Einsatz für Lagerschale
- 88: (Gesamt)Lager aus Lagerschalen 20, 20'
- 90: (Gesamt)Lager aus Lagerschalen 22, 22'
- 92: Partialarretierelement
- 94: zylinderförmiger Aufsatz
- 96: angeschrägter Innenrand des zylinderförmigen Aufsatzes
- 98: Anschlag des Partialwellenstummels für Rand des zylinderformigen Aufsatzes
- 100: Einbuchtung
- 102: erste Kontaktfläche
- 104: zweite Kontaktfläche
- 106: erstes Arretierelement
- 108: Arretiereinheit
- 110: Stirnfläche der Antriebswelle
- 112: (Gesamt)-Wellenstummel
- 114: Gesamteingriffselement
- 116: Stirnfläche der Partialwellenstummel
- α: Winkel zwischen der ersten und zweiten Kontaktfläche

## Patentansprüche

1. Kupplungsverschluß (1) für eine Andockeinrichtung zum, insbesondere umweltisolierten, Umfiillen, Befüllen und/oder Entleeren von Behältnissen mit einer Verschlußseite und einer Behälterseite, umfassend einen Rohrstutzen (2) und eine darin verschwenkbar um eine Achse gelagerte Schließklappe (4), enthaltend eine der Verschlußseite in der Schließstellung zugewandte Außenseite (8), wobei die Schließklappe an mindestens einer Seite, insbesondere auf beiden Seiten, längs der Achse mit einer Partialwelle oder einem Partialwellenstummel (16, 18) in jeweils zur Verschlußseite hin offenem Lager (20, 22), das/die insbesondere in Form von Halbschalen ausgebildet ist bzw. sind, gelagert ist, wobei die Partialwelle(n) oder -wellenstummel (16, 18) geeignet ist (sind), um bei Anlage mit komplementären Partialwellen bzw. -wellenstummeln eines weiteren Kupplungsverschlusses eine Welle oder einen Wellenstummel auszubilden, **dadurch gekennzeichnet, dass** die Partialwelle oder der -wellenstummel (16, 18) mit mindestens einem Eingriffselement (62, 64) in Form einer Nut ausgestattet ist, in das ein komplementäres Eingriffselement, das in Wirkverbindung mit einem Antrieb bringbar ist oder steht, einführbar ist, so dass das mindestens eine Eingriffselement für eine Kraftübertragung und damit eine Verschwenkung der Schließkappe (4) vorgesehen ist, und wobei mindestens eine Partialwelle bzw. ein Partialwellenstummel (16,18) einstückig mit der Schließklappe (4) verbunden ist bzw. vorliegt.

2. Kupplungsverschluß (1) nach Anspruch 1, **dadurch gekennzeichnet, dass** die Partialwelle oder der-wellenstummel (16, 18) mit einer Stirnfläche in axialer Richtung ausgestattet ist, in bzw. auf der das Eingriffselement (62) vorliegt, das axial in ein komplementäres Eingriffselement, das in Wirkverbindung mit einem Antrieb bringbar ist oder steht, einführbar ist.

3. Kupplungsverschluß (1) nach Anspruch 1 oder 2, **dadurch gekennzeichnet, daß** die Schließklappe (4) auf ihrer Außenseite (8) mit mindestens einem Dichtungsabschnitt (13a, 13b) oder mindestens einer, insbesondere umlaufenden, Dichtung (12) versehen ist, die zumindest abschnittsweise am oder benachbart zum Umfangsrand (10) angeordnet ist.

4. Kupplungsverschluß (1) nach einem der vorangehenden Ansprüche, **dadurch gekennzeichnet, daß**
der Rohrstutzen (2) innenseitig zumindest bereichsweise, insbesondere vollumfänglich, mit einer Rohrstutzendichtung (6) ausgestattet ist.

5. Kupplungsverschluß (1) nach einem der vorangehenden Ansprüche, **dadurch gekennzeichnet, daß**
mindestens eine Partialwelle bzw. ein -wellenstummel (16, 18) auf der der Verschlußseite zugewandten Seite zumindest abschnittsweise Auslassungen zum Eingriff für komplementäre Partialwellen bzw. -wellenstummel aufweist, insbesondere zumindest abschnittsweise in Form einer Halbachse vorliegt.

6. Kupplungsverschluß (1) nach einem der vorangehenden Ansprüche, **gekennzeichnet durch**
einen Behälter oder ein Fördermittel, der bzw. das mit dem Rohrstutzen (2) dichtend verbindbar oder verbunden ist.

7. Kupplungsverschluß (1) nach einem der vorangehenden Ansprüche, **gekennzeichnet durch** mindestens einen, insbesondere zwei, Anschläge (40, 42) an den Seitenflächen des Rohrstutzens (2) benachbart zu mindestens einem Lager (20, 22).

8. Kupplungsverschluß (1) nach einem der vorangehenden Ansprüche, **dadurch gekennzeichnet, daß**
das Eingriffselement (62, 64) und/oder die Partialwelle oder der -wellenstummel mindestens ein Partialarretierelement (92), das insbesondere Bestandteil des Eingriffselements (62, 64) ist, geeignet zur Ausbildung eines ersten Arretierelements mit einem Partialarretierelement eines korrespondierenden Kupplungsverschlusses aufweist.

9. Kupplungsverschluß (1) nach einem der vorangehenden Ansprüche, **dadurch gekennzeichnet, daß** die Schließklappe (4) über eine erste Partialwelle oder einen ersten Partialwellenstummel, die bzw. der mit keinem oder mit mindestens einem Eingriffselement ausgestattet ist, in das ein komplementäres Eingriffselement, das in Wirkverbindung mit einem Antrieb bringbar ist oder steht oder das nicht in Wirkverbindung mit einem Antrieb bringbar ist oder steht, einführbar ist, und/oder, längs der schwenkbaren Achse, über eine zweite Partialwelle oder einen zweiten Partialwellenstummel verfügt, die bzw. der mit keinem oder mit mindestens einem zweiten Eingriffselement ausgestattet ist, in das ein komplementäres Eingriffselement, das in Wirkverbindung mit einem Antrieb bringbar ist oder steht oder das nicht in Wirkverbindung mit einem Antrieb bringbar ist oder steht, einführbar ist, wobei mindestens eine Partialwelle oder ein -wellenstummel mit mindestens einem Eingriffselement ausgestattet ist, in das ein komplementäres Eingriffselement, das in Wirkverbindung mit einem Antrieb bringbar ist oder steht, einführbar ist.

10. Andockeinrichtung (66) zum, insbesondere umweltisolierten, Umfüllen, Befüllen und/oder Entleeren von Behältnissen, umfassend über ihre jeweiligen Verschlußseiten aneinander bündig anlegbare oder anliegende erste und zweite Kupplungsverschlüsse (1, 1') gemäß einem der vorangehenden Ansprüche, wobei die Außenseiten (8, 8') der jeweiligen, insbesondere im wesentlichen kreisförmig ausgebildeten, Schließklappen (4, 4') aneinander anliegen oder aneinander zur Anlage bringbar sind und in aneinander angelegtem Zustand aus einer Schließstellung, in der sie den durch den Rohrstutzen (2) des ersten Kupplungsverschlusses (1) und den Rohrstutzen (2') des zweiten Kupplungsverschlusses (1') gebildeten Transferkanal verschließen, um eine gemeinsame Achse in eine Öffnungsstellung schwenkbar sind.

11. Andockeinrichtung (66) nach Anspruch 10, **dadurch gekennzeichnet, daß** die erste Partialwelle oder der erste Partialwellenstummel des ersten Kupplungsverschlusses mit der komplementären ersten Partialwelle bzw. dem komplementären ersten Partialwellenstummel des zweiten Kupplungsverschlusses eine erste Welle oder eine einen ersten Wellenstummel ausbildet, wobei die erste Partialwelle oder der erste Partialwellenstummel des ersten Kupplungsverschlusses mit keinem oder mit mindestens einem Eingriffselement ausgestattet ist, in das ein komplementäres Eingriffselement, das in Wirkverbindung mit einem Antrieb bringbar ist oder steht oder das nicht in Wirkverbindung mit einem Antrieb bringbar ist oder steht, einführbar ist, und/oder daß die erste Partialwelle oder der erste Partialwellenstummel des zweiten Kupplungsverschlusses mit keinem oder mit mindestens einem Eingriffselement ausgestattet ist, in das ein komplementäres Eingriffselement, das in Wirkverbindung mit einem Antrieb bringbar ist oder steht oder das nicht in Wirkverbindung mit einem Antrieb bringbar ist oder steht, einführbar ist, und/oder daß die zweite Partialwelle oder der zweite Partialwellenstummel des ersten Kupplungsverschlusses bei Anlage mit der komplementären zweiten Partialwelle bzw. dem komplementären zweiten Partialwellenstummel des zweiten Kupplungsverschlusses eine Welle oder einen Wellenstummel ausbildet, wobei die zweite Partialwelle oder der zweite Partialwellenstummel des ersten Kupplungsverschlusses mit keinem oder mit mindestens einem Eingriffselement ausgestattet ist, in das ein komplementäres Eingriffselement, das in Wirkverbindung mit einem Antrieb bringbar ist oder steht oder das nicht in Wirkverbindung mit einem Antrieb bringbar ist oder steht, einführbar ist, und/oder daß die zweite Partialwelle oder der zweite Partialwellenstummel des zweiten Kupplungsverschlusses mit keinem oder mit mindestens einem Eingriffselement ausgestattet ist, in das ein komplementäres Eingriffselement, das in Wirkverbindung mit einem Antrieb bringbar ist oder steht oder das nicht in Wirkverbindung mit einem Antrieb bringbar ist oder steht, einführbar ist, wobei mindestens eine erste oder zweite Partialwelle oder mindestens ein erster oder zweiter Partialwellenstummel von erstem oder zweitem Kupplungsverschluß mit mindestens einem Eingriffselement ausgestattet ist, in das ein komplementäres Eingriffselement, das in Wirkverbindung mit einem Antrieb bringbar ist oder steht, einführbar ist.

12. Andockeinrichtung (66) nach Anspruch 10 oder 11, **dadurch gekennzeichnet, daß** die Eingriffselemente der komplementären ersten Partialwellen bzw. Partialwellenstummel von erstem und zweitem Kupplungsverschluß bei gegenseitiger Anlage ein einheitliches Eingriffselement, insbesondere eine einheitliche Nut oder Feder, bilden und/oder daß die Eingriffselemente der komplementären zweiten Partialwellen bzw. Partialwellenstummel von erstem und zweitem Kupplungsverschluß bei gegenseitiger Anlage ein einheitliches Eingriffselement, insbesondere eine einheitliche Nut oder Feder, bilden, jeweils geeignet zur Aufnahme eines komplementären einheitlichen, insbesondere einzigen, Eingriffselements, das nicht oder das in Wirkverbindung mit einem Antrieb bringbar ist oder steht.

13. Andockeinrichtung (66) nach Anspruch 12, **dadurch gekennzeichnet, daß** das einheitliche Eingriffselement der gegenseitig anliegenden ersten Partialwelle bzw. ersten Partialwellenstummel und/oder das einheitliche Eingriffselement der gegenseitig anliegenden zweiten Partialwellen bzw. Partialwellenstummel in einem komplementären einheitlichen Eingriffselement vorliegen oder in dieses einführbar sind, das in Wirkverbindung mit einem Antrieb bringbar ist oder steht.

14. Andockeinrichtung (66) nach einem der Ansprüche 10 bis 13, **dadurch gekennzeichnet, daß** die Partialwellen bzw. -wellenstummel (16, 18; 16', 18') von erstem und zweitem Kupplungsverschluß (1, 1') unter Ausbildung einer Welle oder eines Wellenstummels (82, 84) in den durch die Lagerschalen (20, 20'; 22, 22') von erstem und zweitem Kupplungsverschluß (1, 1') gebildeten Lagern (88, 90) um eine gemeinsame Achse schwenkbar sind.

15. Andockeinrichtung (66) nach einem der Ansprüche 10 bis 14, **gekennzeichnet durch** mindestens eine Führungsvorrichtung (36, 38) für mindestens eine Partialwelle oder einen -wellenstummel (16, 18; 16', 18') mindestens einer Schließklappe (4, 4').

16. Andockeinrichtung (66) nach einem der Ansprüche 10 bis 15, **dadurch gekennzeichnet, daß** die Eingriffselemente (62, 62'; 64, 64') der eine Welle oder einen Wellenstummel (82, 84) bildenden Partialwellen bzw. -Wellenstummel (16, 16'; 18, 18') ein einheitliches Eingriffselement (80) für ein korrespondierendes Eingriffselement einer Antriebswelle, insbesondere in Form einer Nut oder eines Dorns, bilden.

17. Andockeinrichtung (66) nach einem der Ansprüche 10 bis 16, **gekennzeichnet durch** mindestens eine Antriebswelle oder eine mit einem Antrieb in Wirkverbindung bringbare Welle (54, 56), die mit mindestens einem Eingriffselement (58, 60) ausgestattet ist, das komplementär zu mindestens einem Eingriffselement (62, 62'; 64, 64') von erstem oder zweitem Kupplungsverschluß (1, 1'), insbesondere zu dem einheitlichen Eingriffselement (80) von erstem und zweitem Kupplungsverschluß, ist, so daß bei Eingriff dieser einander komplementären Eingriffselemente die aneinander anliegenden Schließklappen (4, 4') über den Antrieb schwenkbar sind.

18. Andockeinrichtung (66) nach einem der Ansprüche 10 bis 17 **gekennzeichnet durch** mindestens einen mit einer Antriebswelle (54, 56) in Wirkverbindung stehenden Antrieb (44).

19. Andockeinrichtung (66) nach einem der Ansprüche 10 bis 18, **dadurch gekennzeichnet, daß** die Dichtungen (12, 12') der Schließklappen (4, 4') von erstem und zweitem Kupplungsverschluß (1, 1') jeweils nur abschnittsweise über deren Außenseiten (8, 8') hervorstehen, wobei diese Abschnitte (13a, 13b; 13a', 13b') der Dichtungen von erstem und zweitem Kupplungsverschluß bei aneinander anliegenden Außenseiten (8, 8') der Schließklappen (4, 4') eine im wesentlichen durchgängige umlaufende Dichtung ausbilden.

20. Andockeinrichtung (66) nach einem der Ansprüche 10 bis 19, **dadurch gekennzeichnet, daß**
die Rohrstutzen (2, 2') von erstem und zweitem Kupplungsverschluß (1, 1'), insbesondere auf jeweils einander gegenüberliegenden Bereichen der Seitenwände oder benachbart hierzu, über Kraftbeaufschlagungspunkte (30, 30'), insbesondere Vorsprünge, verfügen, über die im gekuppelten Zustand die Außenseiten (8, 8') von erstem und zweitem Kupplungsverschluß (1, 1') gegeneinander preßbar und/oder die Rohrstutzen (2, 2') von erstem und zweitem Kupplungsverschluß gegeneinander reversibel arretierbar sind.

21. Andockeinrichtung (66) nach Anspruch 20, **gekennzeichnet durch**
eine Verriegelungseinheit (68, 70), mit der aus im wesentlichen einander gegenläufigen Richtungen, insbesondere jeweils aus behälterseitiger Richtung, die Kraftbeaufschlagungspunkte (30, 30') von erstem und zweitem Kupplungsverschluß (1, 1 ') mit Kraft beaufschlagbar sind.

22. Andockeinrichtung (66) nach einem der Ansprüche 10 bis 21, **gekennzeichnet durch** eine Arbeitsplattform (32), auf der mindestens ein, insbesondere zwei Antriebe (44, 46), mindestens eine, insbesondere zwei Verriegelungseinheiten (68, 70) und gegebenenfalls mindestens ein, insbesondere mindestens zwei Wellenlager (48, 50) für eine Antriebswelle angebracht sind.

23. Andockeinrichtung (66) nach einem der Ansprüche 10 bis 22, **dadurch gekennzeichnet, daß**
der Rohrstutzen (2, 2') von erstem und/oder zweitem Kupplungsverschluß (1, 1') im Bereich der Partialwellen oder -wellenstummel (16, 18; 16', 18') mindestens einen Anschlag (40, 42) und/oder mindestens eine Führeinrichtung (36, 38) für das Wellenlager (48, 50) der Antriebswelle oder den Antrieb (44, 46) aufweist.

24. Andockeinrichtung (66) nach einem der Ansprüche 10 bis 23, **dadurch gekennzeichnet, daß**
der erste Kupplungsverschluß (1), insbesondere dessen Rohrstutzen (2), mit einem ersten Behälter und/oder Fördermittel und/oder der zweite Kupplungsverschluß (1'), insbesondere dessen Rohrstutzen (2'), mit einem zweiten Behälter und/oder Fördermittel dichtend verbunden oder verbindbar ist.

25. Andockeinrichtung (66) nach einem der Ansprüche 10 bis 24, **dadurch gekennzeichnet, daß**
die Eingriffselemente (62, 64) und/oder die Partialwellen oder die -wellenstummel (16, 18) von erstem und zweitem Kupplungsverschluß (1, 1') jeweils mindestens ein Partialarretierelement (92, 92') geeignet zur Ausbildung eines ersten Arretierelements (106) aufweisen und daß das komplementäre Eingriffselement (58, 60) oder die Antriebswelle (54) ein zu dem ersten Arretierelement (106) korrespondierendes zweites Arretierelement (94) aufweist und daß durch Relativbewegung von erstem und zweitem Arretierelement (106, 94) aufeinander zu eine Arretiereinheit (108) ausbildbar ist, wodurch die ersten und zweiten Kupplungsverschlüsse gegeneinander pressbar und/oder arretierbar sind.

26. Andockeinrichtung (66) nach einem der Ansprüche 10 bis 25, **dadurch gekennzeichnet, daß**
die Stirnfläche des komplementären Eingriffselements (58, 60) in einem Winkel zueinander stehende und einander zugewandte erste und zweite Kontaktflächen (102, 104) aufweist, wobei bei axialer Relativbewegung des komplementären Eingriffselements zum Ineingriffbringen der Eingriffselemente (62, 64) bzw. des Gesamteingriffselements (114) von erstem und zweitem Kupplungsverschluß mit dem komplementären Eingriffselement (58, 60) die erste Kontaktfläche (102) des komplementären Eingriffselements (102) mit dem Eingriffselement des ersten Kupplungsverschlusses in Berührung bringbar ist und die zweite Kontaktfläche (104) des komplementären Eingriffselements mit dem Eingriffselement des zweiten Kupplungsverschlusses in Berührung bringbar ist, wodurch die ersten und zweiten Kupplungsverschlüsse gegeneinander preßbar und/oder arretierbar sind, oder wobei die Partialwellen oder -Wellenstummel des ersten und zweiten Kupplungsverschlusses jeweils zumindest bereichsweise über eine, insbesondere in Bezug auf die Drehachse radiale, Anschlagsfläche als Partialarretierelemente verfügen, die unter Ausbildung eines ersten Arretierelements (106) zumindest bereichsweise voneinander weg und zur jeweiligen Behälterseite des Kupplungsverschlusses weisen, und daß das komplementäre Eingriffselement und/oder die Antriebswelle als korrespondierendes zweites Arretierelement (94) stirnseitig über einander im wesentlichen gegenüberliegende und einander zumindest bereichsweise zugewandte, insbesondere in Bezug auf die Drehachse radiale, Kontaktflächenabschnitte verfügen, durch die beim Ineingriffbringen der Eingriffselemente bzw. des Gesamteingriffselements (114) von erstem und zweiten Kupplungsverschluß mit dem komplementären Eingriffselement durch Wechselwirkung mit den Anschlagsflächen von erstem und zweitem Kupplungsverschluß diese gegeneinander preßbar und/oder arretierbar sind.

27. Andockplattform (32) für eine Andockeinrichtung zum, insbesondere umweltdichten, Transfer von Schüttgut, **gekennzeichnet durch**
mindestens einen, insbesondere zwei, auf einer Plattform (32) angebrachte Antriebe (44, 46), eine Durchgangsöffnung (34) in der Plattform (32) für einen Kupplungsverschluß einer Andockeinrichtung sowie gegebenenfalls mindestens eine, insbesondere zwei Verriegelungseinheiten (68, 70) für die Arretierung und/oder das Zusammenpressen der Außenseiten von Schließklappen angedockter Kupplungsverschlüsse einer Andockeinrichtung und/oder mindestens ein Wellenlager (48, 50) für eine Antriebswelle, die mit dem Antrieb in Wirkverbindung steht, ferner umfassend
mindestens einen Kupplungsverschluß (1) gemäß einem der Ansprüche 1 bis 7.

28. Verfahren zum, insbesondere umweltisolierten, Umfüllen, Befüllen und/oder Entleeren von Behältnissen, umfassend die Schritte:
- Zurverfügungstellung eines ersten mit einem ersten Behältnis verbundenen Kupplungsverschlusses gemäß einem der Ansprüche 1 bis 9, wobei die Schließklappe sich in der Schließstellung befindet,
- Zurverfügungstellung eines zweiten mit einem zweiten Behältnis verbundenen Kupplungsverschlusses gemäß einem der Ansprüche 1 bis 8, wobei die Schließklappe sich in der Schließstellung befindet,
- Kuppeln der ersten und zweiten Kupplungsverschlüsse über ihre jeweiligen Verschlußseiten unter Ausbildung einer Andockeinrichtung gemäß einem der Ansprüche 10 bis 26,
- Inwirkverbindungbringen der Antriebswelle eines Antriebs mit der Welle der Andockeinrichtung unter Ineingriffbringen des Eingriffelements der Welle der Andockeinrichtung mit der komplementären Eingriffseinheit der Antriebswelle,
- Schwenken der aneinander anliegenden Schließklappen aus der Schließstellung in eine den Transferkanal zumindest teilweise freigebende Stellung durch Betätigen des Antriebs,
- Überführen von Schüttgut aus dem ersten Behältnis in das zweite Behältnis, oder umgekehrt,
- Schwenken der aneinander anliegenden Schließklappen in die Schließstellung durch Betätigen des Antriebs,
- Entkoppeln von erstem und zweitem Kupplungsverschluß unter Trennung der Andockeinrichtung.

29. Verriegelungseinheit (68)mit zumindest einem Kupplungsverschlusses gemäß einem der Ansprüche 1 bis 9, geeignet für die Verriegelung zweier Rohrstutzen von Kupplungsverschlüssen, umfassend
einen um eine Achse drehbaren Körper mit einer Verriegelungsseite, wobei auf der Verriegelungsseite des Körpers mindestens ein erstes hervortretendes Element und mindestens ein zweites hervortretendes Element angebracht sind oder vorliegen, wobei das erste und das zweite Element zumindest bereichsweise in einer Ebene liegen, die im wesentlichen einen Winkel zur Drehachse aufweist, insbesondere senkrecht zur Drehachse steht, wobei das erste Element und das zweite Element jeweils einen Abstand zur Drehachse aufweisen, der kleiner ist als der Abstand von erstem und zweitem Element zueinander, und wobei die ersten und zweiten Elemente durch Rotation des Körpers um die Drehachse von einer Verriegelungsstellung in eine Öffnungsstellung und umgekehrt bringbar sind.

30. Verwendung der Andockeinrichtung gemäß einem der Ansprüche 10 bis 26 in einer Andockplattform, die **gekennzeichnet ist durch** mindestens einen, insbesondere zwei, auf einer Plattform (32) angebrachte Antriebe (44, 46), ein Durchgangsöffnung (34) in der Plattform (32) für einen Kupplungsverschluß der Andockeinrichtung sowie gegebenenfalls mindestens eine, insbesondere zwei, Verriegelungseinheiten (68, 70) für die Arretierung und/oder das Zusammenpressen der Außenseiten von Schließklappen angedockter Kupplungsverschlüsse der Andockeinrichtung und/oder gegebenenfalls mindestens ein Wellenlager (48, 50) für eine Antriebswelle, die mit dem Antrieb in Wirkverbindung steht.

## Claims

1. A coupling closure (1) for a docking device for decanting, filling and/or emptying containers, particularly in an environmentally isolated manner, having a closure side and a container side, comprising a nozzle stub (2) and a closing flap (4) which is mounted therein so as to be pivotable about an axis and which has an external side (8) that faces the closure side in the closed position, wherein at least one side, in particular both sides, of the closing flap is/are arranged on a bearing (20, 22), which is open towards the closure side in each case, along the axis with a partial shaft or a partial shaft end (16, 18), wherein the partial shaft(s) or the partial shaft end(s) (16, 18) is/are suitable to form, in arrangement with complementary partial shafts or partial shaft ends of another coupling closure, a shaft or a shaft end, **characterized in that** the partial shaft or the partial shaft end (16, 18) has at least one engaging element (62, 64) in form of a slot in which a complementary engaging element, which can be brought, or which is, in effective connection with a drive, can be inserted such that the at least one engaging element is provided for power transmission and thus for pivoting the closing flap (4), and wherein at least one partial shaft or partial shaft end (16, 18) is connected to, or present with, the closing flap (4) in one piece.

2. A coupling closure (1) according to claim 1, **characterized in that** the partial shaft or partial shaft end (16, 18) has a front end in axial direction, in or on which the engaging element (62) is present, which can be inserted axially into a complementary engaging element, which can be brought, or which is, in effective connection with a drive.

3. A coupling closure (1) according to claim 1 or 2, **characterized in that**
the closing flap (4) on its external side (8) has at least one sealing section (13a, 13b) or at least one seal, in particular a circumferential seal (12), which is arranged, at least in sections, on or close to the edge of the circumferential rim (10).

4. A coupling closure (1) according to any one of the preceding claims, **characterized in that** the nozzle stub (2) has a nozzle stub seal (6) at least in parts of its interior, in particular to the full circumference.

5. A coupling closure (1) according to any one of the preceding claims, **characterized in that** at least one partial shaft or partial shaft end (16, 18) on its side facing the closure side has recesses for the engagement of complementary partial shafts or partial shaft ends, at least in sections, in particular in the form of a semi-shaft, at least in sections.

6. A coupling closure (1) according to any one of the preceding claims, **characterized by** a container or a conveyance, which can be, or which is, tightly connected to the nozzle stub (2).

7. A coupling closure (1) according to any one of the preceding claims, **characterized by** at least one, in particular two, limit stops (40, 42) on the side faces of the nozzle stub (2), adjacent to at least one bearing (20, 22).

8. A coupling closure (1) according to any one of the preceding claims, **characterized in that** that the engaging element (62, 64) and/or the partial shaft or the partial shaft end comprises at least one partial locking element (92), in particular a component of the engaging element (62, 64) and suitable for forming a first locking element with a partial locking element of a corresponding coupling closure.

9. A coupling closure (1) according to any one of the preceding claims, **characterized in that** the closing flap (4) has a first partial shaft or a first partial shaft end, which does not have any engaging element or which has at least one engaging element into which a complementary engaging element, which can be brought, or which is, in effective connection with a drive or which cannot be brought, or which is not, in effective connection with a drive, can be inserted and/or, along the pivotable axis, a second partial shaft or a second partial shaft end, which does not have any engaging element or which has at least one second engaging element into which a complementary engaging element, which can be brought, or which is, in effective connection with a drive or which cannot be brought, or which is not, in effective connection with a drive, can be inserted, wherein at least one partial shaft or partial shaft end has at least one engaging element into which one complementary engaging element, which can be brought, or which is, in effective connection with a drive, can be inserted.

10. A docking device (66) for decanting, filling and/or emptying containers, particularly in an environmentally isolated manner, comprising first and second coupling closures (1, 1') according to any one of the preceding claims, which can be, or which are, placed next to each other closely by means of their respective closure sides, wherein the external sides (8, 8') of the respective closing flaps (4, 4') are, or can be, placed next to each other closely and can be pivoted, while being placed closely next to each other, from a closing position, in which they close the transfer channel formed by the nozzle stub (2) of the first coupling, closure (1) and the nozzle stub (2') of the second coupling closure (1'), about a common axis into an open position.

11. A docking device (66) according to claim 10, **characterized in that** the first partial shaft or the first partial shaft end of the first coupling closure and the complementary first partial shaft or the complementary first partial shaft end of the second coupling closure form a first shaft or a first shaft end, wherein the first partial shaft or the first partial shaft end of the first coupling closure does not have any engaging element or has at least one engaging element in which a complementary engaging element, which can be brought, or which is, in effective connection with a drive or which cannot be brought, or which is not, in effective connection with a drive, can be inserted, and/or that the first partial shaft or the first partial shaft end of the second coupling closure does not have any engaging element or has at least one engaging element in which a complementary engaging element, which can be brought, or which is, in effective connection with a drive or which cannot be brought, or is not, in effective connection with a drive, can be inserted, and/or that the second partial shaft or the second partial shaft end of the first coupling closure and the complementary second partial shaft or the complementary second partial shaft end of the second coupling closure, while fitting closely, form a shaft or a shaft end, wherein the second partial shaft or the second partial shaft end of the first coupling closure does not have any engaging element or has at least one engaging element in with a complementary engaging element, which can be brought, or which is, in effective connection with a drive or which cannot be brought, or which is not, in effective connection with a drive, can be inserted, and/or that the second partial shaft or the second partial shaft end of the second coupling closure does not have any engaging element or has at least one engaging element in which a complementary engaging element, which can be brought, or which is, in effective connection with a drive or which cannot be brought, or which is not, in effective connection with a drive, can be inserted, wherein at least a first or a second partial shaft or at least a first or second partial shaft end of the first or second coupling closure has at least one engaging element in which a complementary engaging element, which can be brought, or which is, in effective connection with a drive, can be inserted.

12. A docking device (66) according to claim 10 or 11, **characterized in that** the engaging elements of the complementary first partial shafts or partial shaft ends of the first and second coupling closure, while fitting closely, form a uniform engaging element, in particular a uniform groove or spring, and/or that the engaging elements of the complementary second partial shafts or partial shaft ends of the first and second coupling closure, while fitting closely, form a uniform engaging element, in particular a uniform groove or spring, in each case suitable for receiving a complementary uniform engaging element, in particular a single such element, which cannot be brought, or which is not, or which can be brought, or which is, in effective connection with a drive.

13. The docking device (66) according to claim 12, **characterized in that** the uniform engaging element of the mutually fitting first partial shaft or first partial shaft end and/or the uniform engaging element of the mutually fitting second partial shafts or partial shaft ends form a complementary uniform engaging element or can be inserted in this element, which can be brought, or which is, in effective connection with a drive.

14. A docking device (66) according to any one of claims 10 to 13, **characterized in that** the partial shafts or partial shaft ends (16, 18; 16', 18') of the first and the second coupling closure (1, 1') are pivotable about a common axis while forming a shaft or a shaft end (82, 84) in the bearings (88, 90) formed by the bearing shells (20, 20'; 22, 22') of the first and second coupling closure (1, 1').

15. A docking device (66) according to any one of claims 10 to 14, **characterized by** at least one guide device (36, 38) for at least one partial shaft or one partial shaft end (16, 18; 16', 18') of at least one closing flap (4, 4').

16. A docking device (66) according to any one of claims 10 to 15, **characterized in that** the engaging elements (62, 62'; 64, 64') of the partial shafts or partial shaft ends (16, 16'; 18, 18'), which form a shaft or a shaft end (82, 84), form a uniform engaging element (80) for a corresponding engaging element of a drive shaft, in particular in the form of a groove or a thorn.

17. A docking device (66) according to any one of claims 10 to 16, **characterized by** at least one drive shaft or a shaft (54, 56) which can be brought in effective connection with a drive, which has at least one engaging element (58, 60), which is complementary to at least one engaging element (62, 62'; 64, 64') of the first or the second coupling closure (1, 1'), in particular to the uniform engaging element (80) of the first and the second coupling closure, so that the closely fitting closing flaps (4, 4') can be pivoted about the drive when these complementary elements engage with each other.

18. A docking device (66) according to any one of claims 10 to 17, **characterized by** at least one drive (44) which is in effective connection with a drive shaft (54, 56).

19. A docking device (66) according to any one of claims 10 to 18, **characterized in that** the seals (12, 12') of the closing flaps (4, 4') of the first and the second coupling closure (1, 1') protrude from their external sides (8, 8') only in sections in each case, wherein these sections (13a, 13b; 13a', 13b') of the seals of the first and the second coupling closure form an essentially continuous circumferential seal, when the external sides (8, 8') of the closing flaps (4, 4') are closely fitting.

20. A docking device (66) according to any one of claims 10 to 19, **characterized in that** the nozzle stubs (2, 2') of the first and the second coupling closure (1, 1'), in particular on the opposing portions of the side walls or adjacent thereto, have force application points (30, 30'), in particular projections, by which in the coupled state the external sides (8, 8') of the first and the second coupling closures (1, 1') can be pressed against each other and/or the nozzle stubs (2, 2') of the first and the second coupling closures can be locked against each other reversibly.

21. A docking device (66) according to claim 20, **characterized by**
a locking unit (68, 70) by means of which force can be exerted on the respective force application points (30, 30') of the first and the second coupling closure (1, 1') from essentially opposing directions, in particular from the direction of the container.

22. A docking device (66) according to any one of claims 10 to 21, **characterized by** a working platform (32), on which at least one, in particular two, drive(s) (44, 46), at least one, in particular two, locking unit(s) (68, 70) and, if required, at least one, in particular at least two, shaft bearing(s) (48, 50) for a drive shaft are mounted.

23. A docking device (66) according to any one of claims 10 to 22, **characterized in that** the nozzle stub (2, 2') of the first and/or the second coupling closure (1, 1') comprises within the range of the partial shafts or partial shaft ends (16, 18; 16', 18') at least one limit stop (40, 42) and/or at least one guide device (36, 38) for the shaft bearing (48, 50) of the drive shaft or the drive (44, 46).

24. A docking device (66) according to any one of claims 10 to 23, **characterized in that** the first coupling closure (1), in particular its nozzle stub (2), is connected, or can be connected, tightly with a first container and/or conveyance, and/or the second coupling closure (1'), in particular its nozzle stub (2'), is connected, or can be connected, tightly with a second container and/or conveyance.

25. A docking device (66) according to any one of claims 10 to 24, **characterized in that** the engaging elements (62, 64) and/or the partial shafts or partial shaft ends (16, 18) of the first and the second coupling closure (1, 1') each comprise at least one partial locking element (92, 92') suitable for forming a first locking element (106) and that the complementary engaging element (58, 60) or the drive shaft (54) comprise a second locking element (94), which corresponds to the first locking element (106), and that by relative motion of the first and the second locking element (106, 94) towards each other a locking unit (108) can be formed, whereby the first and the second coupling closures can be pressed and/or locked against each other.

26. A docking device (66) according to any one of claims 10 to 25, **characterized in that** the front end of the complementary engaging element (58, 60) comprises first and second contact areas (102, 104), which are facing each other at an angle, wherein during an axial relative motion of the complementary engaging element for engaging the engaging elements (62, 64) or the total engaging element (114) of the first and the second coupling closures with the complementary engaging element (58, 60) the first contact area (102) of the complementary engaging element (102) can be brought in contact with the engaging element of the first coupling closure and the second contact area (104) of the complementary engaging element can be brought in contact with the engaging element of the second coupling closure, whereby the first and the second coupling closures can be pressed and/or locked against each other, or wherein the partial shafts or partial shaft ends of the first and the second coupling closure have a stop face at least in parts, which is radial, particularly in respect of the axis of rotation, as partial locking elements which, while forming a first locking element (106), face at least in parts away from each other and toward the respective container side of the coupling closure, and that the complementary engaging element and/or the drive shaft have, as a corresponding second locking element (94), contact area sections at the front end, which are in particular radial in respect of the axis of rotation, essentially opposing each other and facing each other at least in parts and by means of which the stop faces of the first and the second coupling closure can be pressed and/or locked against each other due to interaction with these stop faces when engaging the engaging elements or the total engaging element (114) of the first and the second coupling closure with the complementary engaging element.

27. A docking platform (32) for a docking device for the transfer of bulk material, in particular in an environmentally isolated manner, **characterized by**
at least one, in particular two, drive(s) (44, 46) mounted on a platform (32), a passage (34) in the platform (32) for a coupling closure of a docking device and, if required, at least one, in particular two, locking unit(s) (68, 70) for locking and/or pressing against each other the external sides of closing flaps of docked coupling closures of a docking device and/or at least one shaft bearing (48, 50) for a drive shaft which is in effective connection with the drive, further comprising at least one coupling closure (1) according to any one of claims 1 to 7.

28. A method for decanting, filling and/or emptying containers, in particular in an environmentally isolated manner, comprising the steps of:
- Providing a first coupling closure according to any one of claims 1 to 9, which is connected to a first container, wherein the closing flap is in the closed position;
- Providing a second coupling closure according to any one of claims 1 to 8, which is connected to a second container, wherein the closing flap is in the closed position;
- Coupling the first coupling closure with the second coupling closure at their respective closure sides, thus forming a docking device according to any one of claims 10 to 26;
- Establishing an effective connection of the drive shaft of a drive with the shaft of the docking device by engaging the engaging element of the shaft of the docking device with the complementary engaging unit of the drive shaft;
- Moving the closely fitting closing flaps from the closed position to a position which releases the transfer channel at least partly by actuating the drive;
- Transferring bulk material from the first container to the second container, or vice versa;
- Moving the closely fitting closing flaps to the closed position by actuating the drive;
- Decoupling the first and the second coupling closures while detaching the docking device.

29. A locking unit (68) having at least one coupling closure according to claims I to 9, suitable for locking two nozzle stubs of coupling closures, comprising a body with a closure side, which can be rotated about an axis, wherein the closure side of the body has at least one first projecting element and at least one second projecting element, wherein the first and the second element are at least in parts in a plane which is essentially angular to the axis of rotation, in particular perpendicular to the axis of rotation, wherein the distance of the first element and the second element to the axis of rotation is in each case smaller than the distance of the first and the second element to each other, and wherein the first and the second elements can be brought from a locking position to an open position and vice versa by rotation of the body about the axis of rotation.

30. Use of the docking device according to any one of claims 10 to 26 in a docking platform, **characterized by** at least one, in particular two, drive(s) (44, 46) mounted on a platform (32), a passage (34) in the platform (32) for a coupling closure of a docking device and, if required, at least one, in particular two, locking unit(s) (68, 70) for locking and/or pressing against each other the external sides of closing flaps of docked coupling closures of a docking device and/or at least one shaft bearing (48, 50) for a drive shaft which is in effective connection with the drive.

## Revendications

1. Obturateur de couplage (1) pour mécanisme d'accrochage en vue du transvasement, du remplissage et/ou du vidage, en particulier isolé de l'environnement, de réservoirs, avec un côté d'obturation et un côté réservoir, comprenant un embout tubulaire (2) et un volet de fermeture (4) basculable dans celui-ci et monté sur un axe, contenant un côté extérieur (8) tourné en position fermée vers le côté d'obturation, le volet de fermeture étant monté sur au moins un côté, en particulier sur les deux côtés, le long de l'axe avec un arbre partiel ou un bout d'arbre partiel (16, 18) dans un palier (20, 22) ouvert vers le côté d'obturation, lequel/lesquels palier(s) est ou sont formé(s) en particulier en demi-coques, les/l'arbre(s) partiel(s) ou le/les bout(s) d'arbre partiel (16, 18) convenant pour la formation d'un arbre ou d'un bout d'arbre lors du contact avec des arbres partiels complémentaires ou avec des bouts d'arbres complémentaires d'un autre obturateur de couplage, **caractérisé en ce que** l'arbre partiel ou le bout d'arbre partiel (16, 18) est muni d'au moins un élément d'engagement (62, 64) en forme de rainure, dans lequel un élément d'engagement complémentaire qui peut être mis ou est en liaison solidaire avec un entraînement est insérable, de telle sorte qu'au moins un élément d'engagement est prévu pour une transmission de puissance et par conséquent pour un basculement du volet de fermeture (4), et au moins un arbre partiel ou un bout d'arbre partiel (16, 18) étant relié d'une pièce ou existant d'une pièce avec le volet de fermeture (4).

2. Obturateur de couplage (1) selon la revendication 1, **caractérisé en ce que** l'arbre partiel ou le bout d'arbre partiel (16, 18) est muni d'une face frontale en direction axiale, dans ou sur laquelle l'élément d'engagement (62) se trouve, lequel est insérable de façon axiale dans un élément d'engagement complémentaire, lequel peut être mis ou se trouve en liaison solidaire avec un entraînement.

3. Obturateur de couplage (1) selon la revendication 1 ou 2, **caractérisé en ce que** le volet de fermeture (4) est muni sur son côté extérieur (8) d'au moins une section d'étanchéité (13a, 13b) ou d'au moins un joint d'étanchéité (12), en particulier périphérique, lequel est disposé au moins partiellement contre ou au voisinage du bord de la circonférence (10).

4. Obturateur de couplage (1) selon l'une des revendications précédentes, **caractérisé en ce que** l'embout tubulaire (2) est muni du côté intérieur d'un joint d'étanchéité d'embout tubulaire (6) au moins dans certaines zones, en particulier sur toute sa circonférence.

5. Obturateur de couplage (1) selon l'une des revendications précédentes, **caractérisé en ce qu'**au moins un arbre partiel ou un bout d'arbre partiel (16, 18) présente sur le côté tourné vers le côté d'obturation au moins partiellement des évidements pour l'engagement d'arbres partiels ou de bouts d'arbre partiel complémentaires, et est en particulier au moins sur certaines sections en forme de demi-axe.

6. Obturateur de couplage (1) selon l'une des revendications précédentes, **caractérisé par** un récipient ou un transporteur, lequel est reliable ou est relié avec l'embout tubulaire (2) de façon étanche.

7. Obturateur de couplage (1) selon l'une des revendications précédentes, **caractérisé par** au moins un, en particulier deux butées (40, 42) sur les surfaces latérales de l'embout tubulaire (2), au voisinage d'au moins un palier (20, 22).

8. Obturateur de couplage (1) selon l'une des revendications précédentes, **caractérisé en ce que** l'élément d'engagement (62, 64) et/ou l'arbre partiel ou le bout d'arbre partiel présente au moins un élément d'arrêt partiel (92), lequel fait partie en particulier de l'élément d'engagement (62, 64), convenant à la formation d'un premier élément d'arrêt avec un élément d'arrêt partiel d'un obturateur de couplage correspondant.

9. Obturateur de couplage (1) selon l'une des revendications précédentes, **caractérisé en ce que** le volet de fermeture (4) est insérable par un premier arbre partiel ou un premier bout d'arbre partiel, lequel est muni d'aucun ou au moins d'un élément d'engagement, dans lequel un élément d'engagement complémentaire, lequel peut être mis ou est en liaison solidaire avec un entraînement ou ne peut pas être mis ou n'est pas en liaison solidaire avec un entraînement, est insérable, et/ou, le long de l'axe basculable, dispose d'un deuxième arbre partiel ou d'un deuxième bout d'arbre partiel, lequel est muni d'aucun ou au moins d'un deuxième élément d'engagement, dans lequel un élément d'engagement complémentaire, lequel peut être mis ou est en liaison solidaire avec un entraînement ou ne peut pas être mis ou n'est pas en liaison solidaire avec un entraînement, est insérable, au moins un arbre partiel ou un bout d'arbre partiel étant muni d'au moins un élément d'engagement, dans lequel un élément d'engagement complémentaire, lequel peut être mis ou est en liaison solidaire avec un entraînement, est insérable.

10. Mécanisme d'accrochage (66) en vue du transvasement, du remplissage et/ou du vidage, en particulier isolé de l'environnement, de réservoirs, comprenant sur leurs côtés d'obturation respectifs des premier et deuxième obturateurs de couplage (1, 1') pouvant être mis en contact à ras l'un contre l'autre ou étant en contact à ras l'un contre l'autre, conformément à l'une des revendications précédentes, les côtés extérieurs (8, 8') des volets de fermeture (4, 4') respectifs, en particulier formés essentiellement de façon circulaire, étant en contact l'un contre l'autre ou pouvant être mis en contact l'un contre l'autre, et, dans un état de contact l'un contre l'autre, pouvant être basculés sur un axe commun dans une position d'ouverture, à partir d'une position de fermeture dans laquelle ils ferment le canal de transfert formé par l'embout tubulaire (2) du premier obturateur de couplage (1) et par l'embout tubulaire (2') du deuxième obturateur de couplage (1').

11. Mécanisme d'accrochage (66) selon la revendication 10, **caractérisé en ce que** le premier arbre partiel ou le premier bout d'arbre partiel du premier obturateur de couplage forme un premier arbre ou un premier bout d'arbre avec le premier arbre partiel complémentaire ou avec le premier bout d'arbre partiel complémentaire du deuxième obturateur de couplage, le premier arbre partiel ou le premier bout d'arbre partiel du premier obturateur de couplage étant muni d'aucun ou d'au moins un élément d'engagement, dans lequel un élément d'engagement complémentaire, lequel peut être mis ou est en liaison solidaire avec un entraînement ou ne peut pas être mis ou n'est pas en liaison solidaire avec un entraînement, est insérable, et/ou **en ce que** le premier arbre partiel ou le premier bout d'arbre partiel du deuxième obturateur de couplage étant muni d'aucun ou d'au moins un élément d'engagement, dans lequel un élément d'engagement complémentaire, lequel peut être mis ou est en liaison solidaire avec un entraînement ou ne peut pas être mis ou n'est pas en liaison solidaire avec un entraînement, est insérable, et/ou **en ce que** le deuxième arbre partiel ou le deuxième bout d'arbre partiel du premier obturateur de couplage forme un arbre ou un bout d'arbre lors du contact avec le deuxième arbre partiel complémentaire ou avec le deuxième bout d'arbre partiel complémentaire du deuxième obturateur de couplage, le deuxième arbre partiel ou le deuxième bout d'arbre partiel du premier obturateur de couplage étant muni d'aucun ou d'au moins un élément d'engagement, dans lequel un élément d'engagement complémentaire, lequel peut être mis ou est en liaison solidaire avec un entraînement ou ne peut pas être mis ou n'est pas en liaison solidaire avec un entraînement, est insérable, et/ou **en ce que** le deuxième arbre partiel ou le deuxième bout d'arbre partiel du deuxième obturateur de couplage est muni d'aucun ou d'au moins un élément d'engagement, dans lequel un élément d'engagement complémentaire, lequel peut être mis ou est en liaison solidaire avec un entraînement ou ne peut pas être mis ou n'est pas en liaison solidaire avec un entraînement, est insérable, au moins un premier ou deuxième arbre partiel ou au moins un premier ou deuxième bout d'arbre partiel d'un premier ou deuxième obturateur de couplage étant muni d'au moins un élément d'engagement, dans lequel un élément d'engagement complémentaire, lequel peut être mis ou est en liaison solidaire avec un entraînement, est insérable.

12. Mécanisme d'accrochage (66) selon la revendication 10 ou 11, **caractérisé en ce que** les éléments d'engagement des premiers arbres partiels ou bouts d'arbres partiels complémentaires des premier et deuxième obturateurs de couplage forment un élément d'engagement uniforme, en particulier une rainure ou une languette uniforme, lors du contact l'un contre l'autre, et/ou **en ce que** les éléments d'engagement des deuxièmes arbres partiels ou bouts d'arbre partiel complémentaires des premier et deuxième obturateurs de couplage forment un élément d'engagement uniforme, en particulier une rainure ou une languette uniforme, lors du contact l'un contre l'autre, convenant respectivement à l'accueil d'un élément d'engagement complémentaire uniforme, en particulier unique, lequel peut ou non être mis ou est ou non en liaison solidaire avec un entraînement.

13. Mécanisme d'accrochage (66) selon la revendication 12, **caractérisé en ce que** l'élément d'engagement uniforme du premier arbre partiel ou du premier bout d'arbre partiel étant en contact l'un contre l'autre et/ou l'élément d'engagement uniforme du deuxième arbre partiel ou du deuxième bout d'arbre partiel étant en contact l'un contre l'autre se trouvent dans un élément d'engagement uniforme complémentaire ou sont insérables dans celui-ci, lequel peut être mis ou est en liaison solidaire avec un entraînement.

14. Mécanisme d'accrochage (66) selon l'une des revendications 10 à 13, **caractérisé en ce que** les arbres partiels ou les bouts d'arbre partiel (16, 18; 16', 18') du premier et du deuxième obturateur de couplage (1, 1') sont basculables sur un axe commun en formant un arbre ou un bout d'arbre (82, 84) dans les paliers (88, 90) formés par les coques de palier (20, 20'; 22, 22') du premier et du deuxième obturateur de couplage (1, 1').

15. Mécanisme d'accrochage (66) selon l'une des revendications 10 à 14, **caractérisé par** au moins un dispositif de guidage (36, 38) pour au moins un arbre partiel ou au moins un bout d'arbre partiel (16, 18; 16', 18') d'au moins un volet de fermeture (4, 4').

16. Mécanisme d'accrochage (66) selon l'une des revendications 10 à 15, **caractérisé en ce que** les éléments d'engagement (62, 62'; 64, 64') des arbres partiels ou bouts d'arbre partiel (16, 16'; 18, 18') formant un arbre ou un bout d'arbre partiel (82, 84) forment un élément d'engagement (80) uniforme pour un élément d'engagement correspondant d'un arbre d'entraînement, en particulier en forme de rainure ou de broche.

17. Mécanisme d'accrochage (66) selon l'une des revendications 10 à 16, **caractérisé par** au moins un arbre d'entraînement ou un arbre (54, 56) pouvant être mis en liaison solidaire avec un entraînement, lequel arbre est muni d'au moins un élément d'engagement (58, 60), lequel est complémentaire d'au moins un élément d'engagement (62, 62'; 64, 64') du premier ou deuxième obturateurs de couplage (1, 1'), en particulier de l'élément d'engagement (80) uniforme des premier et deuxième obturateurs de couplage, de telle sorte que, lors de l'engagement de ces éléments d'engagement complémentaires entre eux, les volets de fermeture (4, 4') en contact l'un contre l'autre sont basculables par l'entraînement.

18. Mécanisme d'accrochage (66) selon l'une des revendications 10 à 17, **caractérisé par** au moins un entraînement (44) se trouvant en liaison solidaire avec un arbre d'entraînement (54, 56).

19. Mécanisme d'accrochage (66) selon l'une des revendications 10 à 18, **caractérisé en ce que** les joints d'étanchéité (12, 12') des volets de fermeture (4, 4') du premier et du deuxième obturateur de couplage (1, 1') ne dépassent respectivement que sur certains sections de leurs côtés extérieurs (8, 8'), les sections (13a, 13b; 13a, 13b') des joints d'étanchéité du premier et du deuxième obturateur de couplage formant un joint d'étanchéité essentiellement continu sur la circonférence, lorsque les côtés extérieurs (8, 8') des volets de fermeture (4, 4') sont en contact l'un contre l'autre.

20. Mécanisme d'accrochage (66) selon l'une des revendications 10 à 19, **caractérisé en ce que** les embouts tubulaires (2, 2') du premier et du deuxième obturateur de couplage (1, 1'), en particulier dans des zones opposées l'une à l'autre des parois latérales ou au voisinage de celles-ci, disposent de points d'application de force (30, 30'), en particulier de saillies, par lesquels, en état couplé, les côtés extérieurs (8, 8') du premier et du deuxième obturateur de couplage (1, 1') peuvent être pressés l'un contre l'autre et/ou les embouts tubulaires (2, 2') du premier et du deuxième obturateur de couplage sont arrêtables l'un contre l'autre de façon réversible.

21. Mécanisme d'accrochage (66) selon la revendication 20, **caractérisé par** une unité de verrouillage (68, 70) avec laquelle, de directions essentiellement opposées l'une à l'autre, en particulier des directions du côté récipient, une force peut être appliquée aux points d'application de force (30, 30') des premier et deuxième obturateurs de couplage (1, 1').

22. Mécanisme d'accrochage (66) selon l'une des revendications 10 à 21, **caractérisé par** une plate-forme de travail (32) sur laquelle sont montés au moins un, en particulier deux entraînements (44, 46), au moins une, en particulier deux unités de verrouillage (68, 70) et le cas échéant au moins un, en particulier deux paliers d'arbre (48, 50) pour un arbre d'entraînement.

23. Mécanisme d'accrochage (66) selon l'une des revendications 10 à 22, **caractérisé en ce que** les embouts tubulaires (2, 2') des premier et deuxième obturateurs de couplage (1, 1') présentent dans la zone des arbres partiels ou des bouts d'arbre partiel (16, 18; 16', 18') au moins une butée (40, 42) et/ou au moins un dispositif de guidage (36, 38) pour le palier d'arbre (48, 50) de l'arbre d'entraînement ou de l'entraînement (44, 46).

24. Mécanisme d'accrochage (66) selon l'une des revendications 10 à 23, **caractérisé en ce que** le premier obturateur de couplage (1), en particulier son embout tubulaire (2), est relié de façon étanche ou peut être relié de façon étanche avec un premier récipient et/ou transporteur, et/ou le deuxième obturateur de couplage (1), en particulier son embout tubulaire (2), est relié de façon étanche ou peut être relié de façon étanche avec un premier récipient et/ou transporteur.

25. Mécanisme d'accrochage (66) selon l'une des revendications 10 à 24, **caractérisé en ce que** les éléments d'engagement (62, 64) et/ou les arbres partiels ou les bouts d'arbre partiel (16, 18) des premier et deuxième obturateurs de couplage (1, 1') présentent respectivement au moins un élément d'arrêt partiel (92, 92') convenant à la formation d'un premier élément d'arrêt (106), et **en ce que** l'élément d'engagement complémentaire (58, 60) ou l'arbre d'entraînement (54) présente un deuxième élément d'arrêt (94) correspondant au premier élément d'arrêt (106), et **en ce que**, par mouvement relatif du premier et du deuxième élément d'arrêt l'un vis-à-vis de l'autre, une unité d'a rrêt (108) est formable, par laquelle les premier et deuxième obturateurs de couplage peuvent être pressés et/ou arrêtés l'un contre l'autre.

26. Mécanisme d'accrochage (66) selon l'une des revendications 10 à 25, **caractérisé en ce que** la surface frontale de l'élément d'engagement (58, 60) complémentaire présente une première et une deuxième surfaces de contact (102, 104) formant un angle entre elles et tournées l'une vers l'autre, la première surface de contact (102) de l'élément d'engagement (102) complémentaire pouvant être mise en contact avec l'élément d'engagement du premier obturateur de couplage, par mouvement relatif axial de l'élément d'engagement complémentaire pour la mise en engagement de l'élément d'engagement (62, 64) ou de l'élément d'engagement total (114) des premier et deuxième obturateurs de couplage avec l'élément d'engagement (58, 60) complémentaire, et la deuxième surface de contact (104) de l'élément d'engagement complémentaire pouvant être mise en contact avec l'élément d'engagement du deuxième obturateur de couplage, permettant d'arrêter ou de presser les premier et deuxième obturateurs de couplage l'un contre l'autre, ou les arbres partiels ou bouts d'arbre partiel des premier et deuxième obturateurs de couplage disposant respectivement au moins dans certaines zones d'une surface de butée radiale, en particulier relativement à l'axe de rotation, comme éléments d'arrêt partiel, lesquels, en formant un premier élément d'arrêt (106), sont, au moins dans certains zones, détournés l'un de l'autre et tournés vers le côté récipient respectif de l'obturateur de couplage, et **en ce que** l'élément d'engagement complémentaire et/ou l'arbre d'entraînement comme deuxième élément d'arrêt (94) correspondant disposent du côté frontal de sections de surface de contact radiales, en particulier relativement à l'axe de rotation, essentiellement opposées l'une à l'autre et tournées l'une vers l'autre au moins dans certains zones, par lesquelles, lors de la mise en engagement des éléments d'engagement ou de l'élément d'engagement total (114) des premier et deuxième obturateurs de couplage avec l'élément d'engagement complémentaire, par interaction avec les surfaces de contact des premier et deuxième obturateurs de couplage, ceux-ci peuvent être pressés et/ou arrêtés l'un contre l'autre.

27. Plate-forme d'accrochage (32) pour un mécanisme d'accrochage, en vue du transfert de marchandises en vrac, en particulier isolé de l'environnement, **caractérisé par** au moins un, en particulier deux entraînements (44, 46) montés sur une plate-forme (32), une ouverture de passage (34) dans la plate-forme (32) pour un obturateur de couplage d'un mécanisme d'accrochage, ainsi que, le cas échéant, au moins une, en particulier deux unités de verrouillage (68, 70) pour l'arrêt et/ou la pression l'un contre l'autre des côtés extérieurs de volets de fermeture d'obturateurs de couplage accrochés d'un mécanisme d'accrochage et/ou au moins un palier d'arbre (48, 50) pour un arbre d'entraînement, lequel est en liaison solidaire avec l'entraînement, en outre comprenant au moins un obturateur de couplage (1) conformément à l'une des revendications 1 à 7.

28. Procédé en vue du transvasement, du remplissage et/ou du vidage, en particulier isolé de l'environnement, de réservoirs, comprenant les étapes suivantes :
- Mise à disposition d'un premier obturateur de couplage relié avec un premier réservoir conformément à l'une des revendications 1 à 9, le volet de fermeture se trouvant en position de fermeture,
- Mise à disposition d'un deuxième obturateur de couplage relié avec un deuxième réservoir conformément à l'une des revendications 1 à 8, le volet de fermeture se trouvant en position de fermeture,
- Couplage des premier et deuxième obturateurs de couplage par leurs côtés d'obturation respectifs, en formant un mécanisme d'accrochage conformément à l'une des revendications 10 à 26,
- Mise en liaison solidaire de l'arbre d'entraînement d'un entraînement avec l'arbre du mécanisme d'accrochage, avec mise en engagement de l'élément d'engagement de l'arbre du mécanisme d'accrochage avec l'unité d'engagement complémentaire de l'arbre d'entraînement,
- Basculement des volets de fermeture disposés l'un contre l'autre hors de la position de fermeture dans une position dégageant au moins partiellement le canal de transfert par actionnement de l'entraînement,
- Transvasement de marchandises en vrac du premier réservoir dans le deuxième réservoir ou inversement,
- Basculement des volets de fermeture disposés l'un contre l'autre dans la position de fermeture par actionnement de l'entraînement,
- Découplage des premier et deuxième obturateurs de couplage avec séparation du mécanisme d'accrochage.

29. Unité de verrouillage (68) avec au moins un obturateur de couplage conformément à l'une des revendications 1 à 9, convenant pour le verrouillage de deux embouts tubulaires d'obturateurs de couplage, comprenant un corps pouvant pivoter autour d'un axe avec un côté de verrouillage, au moins un premier élément dépassant et au moins un deuxième élément dépassant étant montés ou se trouvant sur le côté de verrouillage du corps, le premier et le deuxième élément se trouvant au moins dans certains zones sur un plan, lequel forme essentiellement un angle avec l'axe de rotation, et est disposé en particulier verticalement par rapport à l'axe de rotation, le premier élément et le deuxième élément se trouvant respectivement à une distance de l'axe de rotation, laquelle est inférieure à la distance entre le premier et le deuxième élément, et le premier et le deuxième élément pouvant passer d'une position de verrouillage dans une position d'ouverture et inversement, par rotation du corps autour de l'axe de rotation.

30. Utilisation du mécanisme d'accrochage conformément à l'une des revendications 10 à 26 sur une plate-forme d'accrochage, laquelle est **caractérisée par** au moins un, en particulier deux entraînements (44, 46) montés sur une plate-forme (32), une ouverture de passage (34) dans la plate-forme (32) pour un obturateur de couplage d'un mécanisme d'accrochage, ainsi que, le cas échéant, au moins une, en particulier deux unités de verrouillage (68, 70) pour l'arrêt et/ou la pression l'un contre l'autre des côtés extérieu rs de volets de fermeture d'obturateurs de couplage accrochés d'un mécanisme d'accrochage et/ou le cas échéant au moins un palier d'arbre (48, 50) pour un arbre d'entraînement, lequel est en liaison solidaire avec l'entraînement.
